(19) Europäisches Patentamt / European Patent Office / Office européen des brevets

(11) **EP 4 741 083 A1**

(12) **EUROPEAN PATENT APPLICATION**

(43) Date of publication:
**13.05.2026 Bulletin 2026/20**

(21) Application number: **25212448.2**

(22) Date of filing: **30.10.2025**

(51) International Patent Classification (IPC):
**B22F 10/28** (2021.01)    **B22F 10/38** (2021.01)
**B22F 10/85** (2021.01)    **B22F 12/90** (2021.01)
**B33Y 10/00** (2015.01)    **B33Y 30/00** (2015.01)
**B33Y 50/02** (2015.01)    **G06T 7/00** (2017.01)
**B33Y 50/00** (2015.01)    **B29C 64/153** (2017.01)
**B29C 64/393** (2017.01)

(52) Cooperative Patent Classification (CPC):
(C-Sets available)
**B22F 10/85; B22F 10/28; B22F 10/38; B22F 12/90;
B33Y 10/00; B33Y 30/00; B33Y 50/02; G06T 7/174;
G06T 7/50;** G06T 7/0002; G06T 7/0004;
G06T 7/0008                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.10.2024   JP 2024191455
03.09.2025   JP 2025145901**

(71) Applicant: **JEOL Ltd.
Akishima, Tokyo 196-8558 (JP)**

(72) Inventors:
• **TSUTAGAWA, Nari
Tokyo 196-8558 (JP)**

• **KANEKO, Yuhei
Tokyo 196-8558 (JP)**
• **ASANUMA, Yuji
Tokyo 196-8558 (JP)**
• **TSUDA, Takashi
Tokyo 196-8558 (JP)**
• **SUWA, Kento
Tokyo 196-8558 (JP)**
• **OHARA, Shuma
Tokyo 196-8558 (JP)**
• **SHIBATA, Kohei
Tokyo 196-8558 (JP)**

(74) Representative: **Boult Wade Tennant LLP
Salisbury Square House
8 Salisbury Square
London EC4Y 8AP (GB)**

(54) **INFORMATION PROCESSING APPARATUS, DEFECT DETECTION METHOD, AND THREE-DIMENSIONAL POWDER BED FUSION ADDITIVE MANUFACTURING APPARATUS**

(57)    An information processing apparatus includes: a defect candidate specifying unit (72) configured to specify a plurality of defect candidates positioned at substantially the same positions in a plurality of layers adjacent to each other in a stacking direction; a defect detection unit (73) configured to detect a defect remaining in a manufactured object based on a size of the plurality of defect candidates positioned at the substantially same positions and specified in the plurality of layers in the stacking direction and a size of each of the plurality of defect candidates in the layer, and to determine the defect as any one of a first defect which is not allowed to remain in the manufactured object and a second defect which is allowed to remain in the manufactured object based on a maximum length of the defect; and a display control unit (74) configured to create a visualized image obtained by visualizing defect information including at least one of the first defect and the second defect and to perform control such that the visualized image is displayable on a display unit (90) during powder bed fusion additive manufacturing.

EP 4 741 083 A1

**FIG. 5**

```
        START
    DEFECT CANDIDATE
 SPECIFYING PROCESSING
           │
           ▼                                    S11
┌──────────────────────────────┐
│   MEASURE AREA OF EACH OF TWO │
│   DEFECT CANDIDATES OF WHICH  │
│    XY CROSS SECTIONS AT LEAST │
│  PARTIALLY OVERLAP EACH OTHER │
└──────────────────────────────┘
           │                                    S12
           ▼
┌──────────────────────────────┐
│    CALCULATE AREA RATIO OF    │
│     TWO DEFECT CANDIDATES     │
│       AND AREA RATIO OF       │
│      OVERLAPPING PORTION      │
└──────────────────────────────┘
           │
           ▼                                    S13
        ┌ ARE CONDITIONS ┐
       RELATED TO AREA RATIOS    ─── NO ───┐
        RA AND RB AND PARAMETERS            │
         α AND β SATISFIED?                 │
           │                               ▼
          YES                          S15
                        ┌ ARE CONDITIONS ┐
          ┌── YES ──   RELATED TO AREA RATIOS
          │             RA AND RB AND PARAMETER
          │                  γ SATISFIED?
          ▼                       │
┌──────────────────────────────┐ NO
│   SPECIFY THAT TWO DEFECT     │ S14
│ CANDIDATES ARE AT SUBSTANTIALLY│
│       SAME POSITIONS          │
│     (POSITION DEFINITION 1)   │
└──────────────────────────────┘
           │◄───────────────────────┘
           ▼                                    S16
┌──────────────────────────────┐
│     RECORD POSITION AND       │
│   SIZE OF DEFECT CANDIDATE    │
│     AS DEFECT INFORMATION     │
└──────────────────────────────┘
           │
           ▼
        RETURN
```

# FIG. 15

x DIRECTION

z DIRECTION

N+7-TH LAYER
N+6-TH LAYER
N+5-TH LAYER
N+4-TH LAYER
N+3-TH LAYER
N+2-TH LAYER
N+1-TH LAYER
N-TH LAYER

ID4, ID2, ID1, ID3

$Lz4$, $Lx4$, $Lz2$, $Lz3$, $Lz1$, $Lx1$, $Lx3$, $Lx2$

*FIG. 17*

```
           ┌─────────────────────────────┐
           │          START              │
           │  IMAGE EDITING PROCESSING   │
           └─────────────────────────────┘
                         │
                         │  S51
                         ▼
           ┌─────────────────────────────┐
           │   READ INFORMATION REGARDING│
           │ DEFECTS A AND B AND INFORMATION│
           │  REGARDING DEFECT CANDIDATE │
           └─────────────────────────────┘
                         │
                         │  S52
                         ▼
           ┌─────────────────────────────┐
           │   ASSIGN FIRST COLOR (RED)  │
           │    TO REGION OF DEFECT A    │
           └─────────────────────────────┘
                         │
                         │  S53
                         ▼
           ┌─────────────────────────────┐
           │ ASSIGN SECOND COLOR (YELLOW)│
           │    TO REGION OF DEFECT B    │
           └─────────────────────────────┘
                         │
                         │  S54
                         ▼
           ┌─────────────────────────────┐
           │  ASSIGN THIRD COLOR (BLUE)  │
           │ TO REGION OF DEFECT CANDIDATE│
           │  OTHER THAN DEFECTS A AND B │
           └─────────────────────────────┘
```

S55 — GENERATE TWO-DIMENSIONAL IMAGE (FIRST EMBODIMENT)

S56 — GENERATE THREE-DIMENSIONAL IMAGE (SECOND EMBODIMENT)

S57 — GENERATE RESULT TABLE (THIRD EMBODIMENT)

S58 — GENERATE HISTOGRAM AND GRAPH (FOURTH EMBODIMENT)

S59 — EDIT INTO VISUALIZED IMAGE

RETURN

4

## FIG. 21

120

| | Part Name | VOLUME OF EACH Part [mm^3] | VOLUMETRIC DEFECT RATIO [%] | NUMBER OF DEFECTS | MAXIMUM DEFECT LENGTH [um] | DETERMINATION RESULT |
|---|-----------|------------------------|---------------------------|-------------------|---------------------------|----------------------|
| 7 | Parts A | 247.513 | 0.170 | 2 | 849@I206 | BAD |
| 8 | Parts B | 259.478 | 0.000 | 0 | 0 | GOOD |
| 9 | Parts C | 510.000 | 0.000 | 0 | 0 | GOOD |

(52)  Cooperative Patent Classification (CPC): (Cont.)

C-Sets
B22F 2999/00, B22F 10/80, B22F 12/90,
B22F 2203/01;
B22F 2999/00, B22F 10/80, B22F 12/90,
B22F 2203/03;
B22F 2999/00, B22F 10/85, B22F 12/90;
B22F 2999/00, B22F 12/90, B22F 10/38

**Description**

BACKGROUND

Technical Field

The present invention relates to an information processing apparatus, a defect detection method, and a three-dimensional powder bed fusion additive manufacturing (PBF-AM) apparatus.

Related Art

In recent years, a three-dimensional powder bed fusion additive manufacturing (PBF-AM) technology in which layers obtained by thinly spreading a metal powder material are stacked one by one is in the limelight, and many types of three-dimensional PBF-AM technologies have been developed based on differences in powder material and manufacturing method.

In a manufacturing method of a three-dimensional PBF-AM apparatus according to a related art, for example, the powder material is spread layer by layer on a base plate installed on an upper surface of a stage. Next, for the powder material spread on the base plate, only a two-dimensional structure portion corresponding to one cross section of a manufactured object is melted by a heating mechanism including an electron beam or a laser. Then, such layers of the powder material are stacked one by one in a height direction (Z direction) to form the manufactured object. At the time of manufacturing each layer of the manufactured object, a powder bed is formed on the base plate. Therefore, such a manufacturing method is also referred to as a powder bed method.

In the formation of the manufactured object, the powder material cannot be completely melted at a portion where a sintering defect occurs, and unevenness occurs on the surface of the manufactured object in the middle of manufacturing. Since such unevenness can become a defect, in the three-dimensional PBF-AM apparatus, defect detection is performed based on data acquired from the surface of the manufactured object by performing camera imaging or backscattered electron (BSE) imaging. The camera imaging is, for example, a method of imaging the surface of the manufactured object with visible light. The BSE imaging is a method of imaging the surface of the manufactured object by detecting backscattered electrons of an electron beam with which the surface of the manufactured object is irradiated.

Layer data obtained by the camera imaging or the BSE imaging is displayed on a monitor as an XY cross-sectional view per layer of the manufactured object in the middle of manufacturing. A user can confirm a state of an XY cross section immediately after melting of the powder material by using the layer data. Furthermore, the user has been able to specify a portion (referred to as a defect candidate) that can become a defect based on the unevenness on the surface of the manufactured object in the middle of manufacturing. Examples of the defect candidate include a portion with unevenness occurring in the layer, and a portion insufficiently melted and thus formed with a space.

As a technology related to such defect detection, a technology disclosed in Patent Literature 1 has been known. Patent Literature 1 discloses that "the determination unit calculates a height of a protrusion and at least one of a total area of a region where the protrusion is generated and an occupation ratio of the protrusion in a sintered region based on a state of the protrusion measured by a surface state measurement unit, and compares the calculated value with a corresponding threshold to determine whether a manufacturing state of a sintered layer is good or poor".

Citation List

Patent Literature

Patent Literature 1: JP 2020-200501 A

SUMMARY

Even if the user can confirm the state of the XY cross section immediately after melting for each layer by using the defect detection function according to the related art as described above, it is difficult for the user to visually confirm the states of all the layers since PBF-AM is performed on hundreds to thousands of layers until the completion of the manufactured object. After the PBF-AM is completed, information necessary for defect detection cannot be obtained unless the manufactured object is inspected by another measuring device (for example, a device using X-ray computed tomography (CT)). For this reason, it has usually been impossible to know whether or not a problematic defect has occurred during the PBF-AM until after the completion of the PBF-AM. With the defect detection function according to the related art, for example, a position of the defect could not be obtained as defect information.

The present invention has been made in view of such a circumstance, and an object of the present invention is to enable confirmation as to whether or not a problematic defect has occurred in a manufactured object during PBF-AM.

An information processing apparatus according to the present invention includes: a defect candidate specifying unit (72) configured to detect a defective portion of a layer as a defect candidate for each layer based on layer data obtained for each layer of a manufactured object manufactured by powder bed fusion additive manufacturing (PBF-AM), and to specify a plurality of defect candidates positioned at substantially the same positions in a plurality of layers adjacent to each other in a stacking direction; a defect detection unit (73) configured to detect a defect remaining in a manufactured object based on a size of the plurality of defect candidates positioned at the substantially same positions and specified in the plurality of layers in the stacking direction and a size of each of the plurality of defect candidates in the layer, and to determine the defect as any one of a first defect which is not allowed to remain in the manufactured object and a second defect which is allowed to remain in the manufactured object based on a maximum length of the defect; and a display control unit (74) configured to create a visualized image obtained by visualizing defect information including at least one of the first defect and the second defect and to perform control such that the visualized image is displayable on a display unit (90) during the PBF-AM.

Note that the above information processing apparatus is one aspect of the present invention, and a defect detection method and a three-dimensional PBF-AM apparatus reflecting one aspect of the present invention are also configured similarly to the above information processing apparatus.

According to the present invention, since the visualized image obtained by visualizing the defect information including at least one of the first defect and the second defect is displayed on the display unit, it is possible to confirm whether or not a problematic defect has occurred in the manufactured object during the PBF-AM.

Problems, configurations, and effects other than those described above will be clarified by the following description of embodiments.

BRIEF DESCRIPTION OF DRAWINGS

FIG. 1 is a schematic cross-sectional view schematically illustrating a three-dimensional powder bed fusion additive manufacturing (PBF-AM) apparatus according to a first embodiment of the present invention;

FIG. 2 is a block diagram illustrating a configuration example of a control system of the three-dimensional PBF-AM apparatus according to the first embodiment of the present invention;

FIG. 3 is a block diagram illustrating a configuration example of control blocks of a personal computer (PC) according to the first embodiment of the present invention;

FIG. 4 is a flowchart illustrating an example of defect detection processing according to the first embodiment of the present invention;

FIG. 5 is a flowchart illustrating an example of defect candidate specifying processing according to the first embodiment of the present invention;

FIG. 6 is a perspective view of a manufactured object according to the first embodiment of the present invention;

FIG. 7 is a view illustrating an example of a backscattered electron (BSE) image of the manufactured object when viewed from above in a Z direction during PBF-AM according to the first embodiment of the present invention;

FIG. 8 is a diagram illustrating an example of a BSE image in which a defect candidate A occurring in an N-th layer is confirmed according to the first embodiment of the present invention;

FIG. 9 is a diagram illustrating an example of a BSE image in which a defect candidate B occurring in an N+1-th layer is confirmed according to the first embodiment of the present invention;

FIG. 10 is a diagram illustrating an example of a BSE image of the defect candidate A and the defect candidate B confirmed when the N-th layer and the N+1-th layer according to the first embodiment of the present invention are superimposed;

FIG. 11 is a diagram illustrating examples of the defect candidates A and B having extremely different sizes according to the first embodiment of the present invention;

FIG. 12 is a flowchart illustrating an example of defect determination processing according to the first embodiment of the present invention;

FIG. 13 is a diagram illustrating examples of defect candidates that span a plurality of layers according to the first embodiment of the present invention;

FIG. 14 is a diagram illustrating an example of a defect candidate ID assigned to each defect candidate integrated by a defect detection unit according to the first embodiment of the present invention;

FIG. 15 is a diagram illustrating an example in which lengths of the defect candidate in an X direction, a Y direction, and the Z direction are measured, the defect candidate being integrated by the defect detection unit according to the first embodiment of the present invention;

FIG. 16 is a flowchart illustrating an example of display control processing according to the first embodiment of the present invention;

FIG. 17 is a flowchart illustrating an example of image editing processing according to the first embodiment of the present invention;

FIG. 18 is a view illustrating an example of a BSE image of the manufactured object when viewed from above in the Z direction during the PBF-AM according to the first embodiment of the present invention;

FIG. 19 is a view illustrating a display example of a defect display screen displayed on a display unit according to the first embodiment of the present invention;

FIG. 20 is a view illustrating a display example of a defect display screen on which a manufactured object according to a second embodiment of the present invention is displayed in 3D;

FIG. 21 is a diagram illustrating a display example of a result table display screen on which a result table according to a third embodiment of the present invention is displayed;

FIG. 22 is a histogram representing a relationship between a defect length and the number of defects of each of two manufactured objects according to a fourth embodiment of the present invention;

FIG. 23 illustrates line graphs representing a relationship among the number of defects, a defect area, and an area defect ratio of each of two manufactured objects according to the fourth embodiment of the present invention;

FIG. 24 is a flowchart illustrating an example of defect determination processing according to a sixth embodiment of the present invention;

FIG. 25 is a flowchart illustrating an example of defect determination processing according to a seventh embodiment of the present invention; and

FIG. 26 is a view illustrating a display example of a report screen according to a modified example of the first to seventh embodiments of the present invention.

## DETAILED DESCRIPTION

Hereinafter, embodiments of an information processing apparatus, a three-dimensional powder bed fusion additive manufacturing (PBF-AM) apparatus, and a defect detection method according to the present invention will be described with reference to the drawings. Note that the same reference numerals denote the same members in the respective drawings, and redundant description will be omitted.

[1. First Embodiment]

1-1. Configuration of Three-Dimensional Powder Bed Fusion Additive Manufacturing (PBF-AM) Apparatus

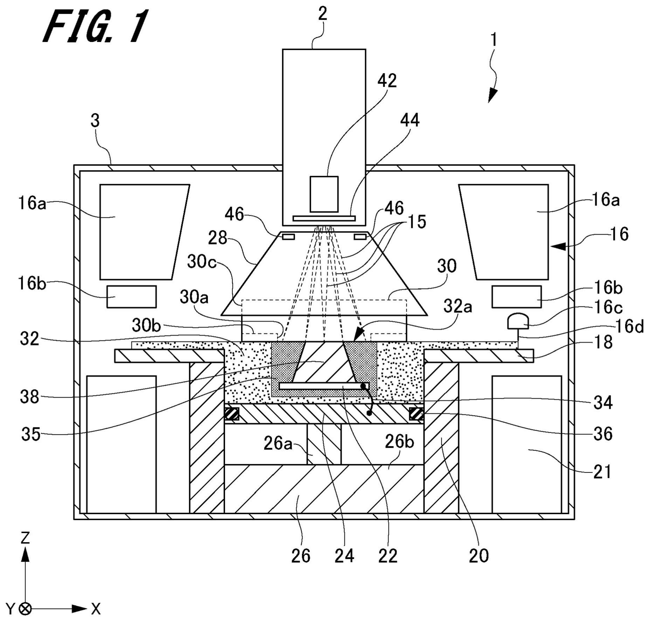

First, a three-dimensional PBF-AM apparatus according to a first embodiment (hereinafter, referred to as the "present example") of the present invention will be described with reference to FIG. 1.

FIG. 1 is a schematic cross-sectional view schematically illustrating the three-dimensional PBF-AM apparatus of the present example. In the following description, in order to clarify the shape, positional relationship, and the like of each part of the three-dimensional PBF-AM apparatus, a left-right direction in FIG. 1 is referred to as an X direction, a depth direction in FIG. 1 is referred to as a Y direction, and an up-down direction in FIG. 1 is referred to as a Z direction. The X direction, the Y direction, and the Z direction are directions orthogonal to one another. The X direction and the Y direction are parallel to a horizontal direction, and the Z direction is parallel to a vertical direction.

A three-dimensional PBF-AM apparatus 1 illustrated in FIG. 1 is an apparatus that manufactures a three-dimensional object by irradiating a powder material 32 made of metal powder such as titanium, copper, or tungsten with an electron beam 15 (an example of a beam for manufacturing) to melt the powder material 32, and stacking layers obtained by solidifying the powder material 32.

As illustrated in FIG. 1, the three-dimensional PBF-AM apparatus 1 includes a vacuum chamber 3, a beam irradiation device 2 (an example of an electron gun), a powder supply device 16, a build table 18, a build box 20, and a collection box 21. The three-dimensional PBF-AM apparatus 1 further includes a build plate 22, an inner base 24, a plate moving device 26, a radiation shield cover 28, an electron shield 30, a camera 42, and a shutter 44. The three-dimensional PBF-AM apparatus 1 further includes a plurality of detection units 46 that detect backscattered electrons.

The vacuum chamber 3 is a chamber for making a vacuum state by evacuating air in the chamber by a vacuum pump (not illustrated). The inside of the vacuum chamber 3 is maintained in vacuum. The beam irradiation device 2 is mounted on the vacuum chamber 3.

The beam irradiation device 2 is a device that irradiates the build plate 22 or a manufactured surface 32a of the powder layer formed of the powder material 32 with the electron beam 15, and includes an electron gun (an example of a beam irradiation unit) and an electron optical system. The manufactured surface 32a corresponds to an upper surface of the powder layer. A state of the powder layer changes as a three-dimensional PBF-AM process proceeds. Although not illustrated, the beam irradiation device 2 includes the electron gun that is a generation source of the electron beam 15, a focusing lens that focuses the electron beam 15 generated by the electron gun, and a deflection lens that deflects the electron beam 15 focused by the focusing lens as the electron optical system.

The focusing lens is implemented using a focusing coil, and focuses the electron beam 15 by a magnetic field generated by the focusing coil. The deflection lens is implemented using a deflection coil, and deflects the electron beam 15 by a magnetic field generated by the deflection coil. Therefore, the electron optical system performs scanning with the electron beam 15 according to a melting condition for melting the powder material, and melts the uppermost layer (an example of a powder bed) of the powder material spread on the build plate 22 by using the electron beam 15.

The powder supply device 16 (an example of a powder supply system) supplies the powder material 32, which is an example of a powder material to be a raw material of a manufactured object 38, onto the build table 18 and spreads the powder material 32 over the build plate 22 to form the powder layer. The powder supply device 16 includes a hopper 16a, a powder dropping device 16b, and a recoater 16c.

The hopper 16a is a container for storing the metal powder. The powder dropping device 16b is a device that drops the powder material 32 stored in the hopper 16a onto the build table 18. The recoater 16c is an elongated member which is long in the Y direction, and includes a blade for spreading powder. The recoater 16c spreads the powder material 32 dropped by the powder dropping device 16b over the build table 18 and the build plate 22. The recoater 16c is provided to be movable in the X direction in order to spread the powder material 32 over the entire surface of the build table 18.

The build table 18 is horizontally disposed inside the vacuum chamber 3. The build table 18 is disposed below the powder supply device 16. A central portion of the build table 18 is opened. An opening shape of the build table 18 is a circle in plan view or a square in plan view (for example, a quadrangle in plan view).

The build box 20 forms a space for manufacturing. The build box 20 having a circular or angular cross section is provided in the vacuum chamber 3. An upper end portion of the build box 20 is connected to an opening edge of the build table 18. A lower end portion of the build box 20 is connected to a bottom wall of the vacuum chamber 3.

The collection box 21 collects an excess portion of the powder material 32 supplied onto the build table 18 by the powder supply device 16.

The build plate 22 forms the manufactured object 38 by using the powder material 32. The manufactured object 38 is formed by being stacked on the build plate 22. The build plate 22 is formed in a circular shape in plan view or a square shape in plan view in accordance with the opening shape of the build table 18. The build plate 22 is connected (grounded) to the inner base 24 by a ground wire 34 so as not to be in an electrically floating state. The inner base 24 is held at a ground (GND) potential.

When manufacturing each layer of the manufactured object 38, the powder bed is formed on the build plate 22 and the inner base 24. The powder bed is obtained by spreading the powder material 32 up to a position several mm higher than the build table 18 installed on the build box 20. The powder bed is formed by the powder supply device 16 filled with the powder material 32 and the recoater 16c.

The inner base 24 is provided to be movable in the up-down direction (Z direction). The build plate 22 moves in the up-down direction integrally with the inner base 24. The inner base 24 has a larger outer dimension than the build plate 22. The inner base 24 slides in the up-down direction along an inner surface of the build box 20. A sealing member 36 is attached to an outer peripheral portion of the inner base 24. The sealing member 36 is a member that maintains slidability and sealability between the outer peripheral portion of the inner base 24 and the inner surface of the build box 20.

The sealing member 36 is made of a material having heat resistance and elasticity. The powder material 32 is spread over the inner base 24, and the build plate 22 on which the manufactured object 38 is manufactured is disposed.

The plate moving device 26 moves the build plate 22 and the inner base 24 in the up-down direction. The plate moving device 26 is provided at a lower portion on an inner side of the build box 20. The plate moving device 26 includes a shaft 26a and a drive mechanism unit 26b. The shaft 26a is connected to a lower surface of the inner base 24. The drive mechanism unit 26b includes a motor and a power transmission mechanism (not illustrated), and drives the power transmission mechanism by using the motor as a drive source to move the build plate 22 and the inner base 24 in the up-down direction (Z direction) integrally with the shaft 26a. The power transmission mechanism is implemented by, for example, a rack and pinion mechanism, a ball screw mechanism, or the like.

The radiation shield cover 28 is disposed between the build plate 22 and the beam irradiation device 2 in the Z direction. The radiation shield cover 28 is made of metal such as stainless steel. The radiation shield cover 28 blocks radiant heat generated when the powder material 32 is irradiated with the electron beam 15 by the beam irradiation device 2.

The electron beam 15 irradiates the powder material 32 and melts the powder material 32. At this time, in a case where the radiant heat radiated from the manufactured surface 32a of the powder layer is widely diffused into the vacuum chamber 3, thermal efficiency is deteriorated.

On the other hand, in a case where the radiation shield cover 28 is disposed above the build plate 22, the heat radiated from the manufactured surface 32a is blocked by the radiation shield cover 28, and the blocked heat is reflected by the radiation shield cover 28 and returned toward the build plate 22. Therefore, the heat generated by irradiation with the electron beam 15 can be efficiently used.

In addition, the radiation shield cover 28 has a function of preventing adhesion (vapor deposition) of an evaporated substance to an inner wall of the vacuum chamber 3, the evaporated substance being generated when the powder material 32 is irradiated with the electron beam 15. Here, the evaporated material is metal vapor, spark-induced metal sputtering, or the like.

That is, when the powder material 32 is irradiated with the electron beam 15, a part of the melted metal becomes an atomized evaporated substance and rises from the manufactured surface 32a. The radiation shield cover 28 is disposed so as to cover a space above the manufactured surface 32a, so that the evaporated substance is not diffused into the vacuum chamber 3.

The manufactured object 38 is constructed by two-dimensionally melting the powder material 32 corresponding to one layer present in a region of the manufactured object 38 using the electron beam 15 from the beam irradiation device 2 and overlapping layers of the melted powder material. A region of the powder material 32 spread over the build plate 22 other than the manufactured object 38 is a pre-sintered body 35 obtained by pre-sintering the powder material 32, and has electrical conductivity by the electron beam 15 emitted from the beam irradiation device 2.

An electron shield 30 is mounted under the radiation shield cover 28. The electron shield 30 includes an opening portion 30a and a shielding portion 30b. In forming the manufactured object 38, the electron shield 30 is disposed to cover an upper surface of the powder material 32, that is, the manufactured surface 32a.

At this time, the opening portion 30a exposes the powder material 32 spread over the build plate 22. The shielding portion 30b is a conductive material that shields the powder material 32 in an unsintered region positioned outside the opening portion 30a. Note that the shielding portion 30b is desirably formed of the same type of metal material as the powder material.

A shape of the opening portion 30a matches a shape of the build plate 22. For example, if the build plate 22 has a circular shape in plan view, the shape of the opening portion 30a in plan view is a circular shape matching the circular shape of the build plate 22, and if the build plate 22 has a rectangular shape in plan view, the shape of the opening portion 30a in plan view is a rectangular shape matching the rectangular shape of the build plate 22.

The electron shield 30 is disposed under the radiation shield cover 28. The opening portion 30a and the shielding portion 30b of the electron shield 30 are disposed between the build plate 22 and the radiation shield cover 28 in the Z direction. The electron shield 30 includes an enclosure portion 30c. The enclosure portion 30c is disposed so as to surround a space above the opening portion 30a. A part (upper portion) of the enclosure portion 30c overlaps the radiation shield cover 28 in the Z direction.

The enclosure portion 30c has a function of blocking the radiant heat generated from the manufactured surface 32a and a function of suppressing diffusion of the evaporated substance generated from the manufactured surface 32a. That is, the enclosure portion 30c has the same function as the radiation shield cover 28. Although not illustrated, the electron shield 30 is provided with a vertical drive mechanism and is lifted so as not to interfere with the recoater 16c at the time of recoating.

The electron shield 30 is made of metal having a melting point higher than that of the powder material 32 used as a raw material of the manufactured object 38. The electron shield 30 is made of a material having low reactivity with the powder material 32. Examples of a constituent material of the electron shield 30 can include titanium. The electron shield 30 may be made of metal of the same material as the powder material 32 to be used. Although not illustrated, the electron shield 30 is electrically grounded to GND. In a preheating process before a sintering process described below, in a case where the powder material 32 is pre-sintered by irradiation with the electron beam 15, the electron shield 30 performs an electrical shielding function to suppress the occurrence of powder scattering to a small scale.

The camera 42 for imaging a state of the manufactured surface and the shutter 44 for preventing vapor deposition to the camera 42 as much as possible are attached onto an upper surface of the radiation shield cover 28. The camera 42 is a camera capable of imaging the manufactured surface 32a of the powder layer. The camera 42 is disposed so as to be shifted in position in the Y direction from the beam irradiation device 2, so that camera 42 does not interfere with the beam irradiation device 2.

The camera 42 is preferably a visible light camera such as a digital video camera. The camera 42 generates an image (image data) of the powder layer by imaging the manufactured surface 32a of the powder layer. Therefore, the image generated by the camera 42 is an image indicating a state of the manufactured surface 32a of the powder layer. Note that the imaging using the camera 42 is performed in a state in which illumination light emitted from an illumination light source (not illustrated) included in the three-dimensional PBF-AM apparatus 1 is applied to the manufactured surface 32a of the powder layer.

The shutter 44 protects the camera 42 and an observation window, so that the evaporated substance generated from the manufactured surface 32a when the powder material 32 is melted by irradiation with the electron beam 15 does not adhere to the camera 42 and the observation window. The imaging of the manufactured surface 32a using the camera 42 is performed in a state in which the shutter 44 is opened. The camera 42 basically keeps performing the imaging, and the shutter 44 is closed only during a melting process. In addition, in a process in which the evaporated substance is likely to be generated and a process in which an amount of the evaporated substance generated is large, that is, in a process in which the powder material 32 is melted by the electron beam 15, the imaging using the camera 42 is performed in a state in which the shutter 44 is closed.

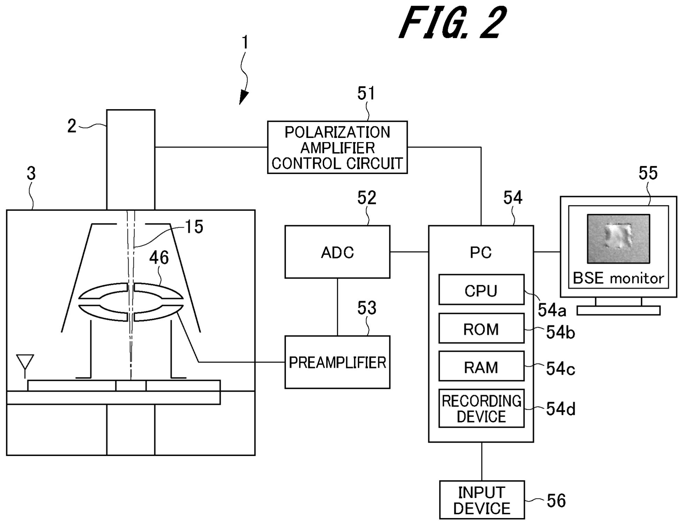

The plurality of detection units 46 that detect the backscattered electrons are disposed below the beam irradiation device 2. Specifically, the detection units 46 are disposed between the beam irradiation device 2 and the manufactured surface 32a of the manufactured object 38 formed on the build plate 22. The detection unit 46 measures the backscattered electrons generated by the electron beam 15 with which the manufactured object 38 or the pre-sintered body 35 is irradiated, and outputs data of a backscattered electron signal as layer data to a personal computer (PC) 54 illustrated in FIG. 2 described below or a hard computer (not illustrated).

In recent years, for the purpose of quality control of the manufactured object 38, the three-dimensional PBF-AM apparatus 1 having an additional function of monitoring the surface of the manufactured object 38 has been provided. In the three-dimensional PBF-AM apparatus 1, the surface of the manufactured object 38 can be visualized based not only on data of an image obtained by imaging the surface of the manufactured object 38 using the camera 42 described above but also on data obtained by detecting the backscattered electrons reflected from the surface of the manufactured object 38 using the detection unit 46. However, the three-dimensional PBF-AM apparatus 1 may have either a configuration including only the camera 42 or a configuration including the camera 42 and the detection unit 46.

In the following embodiment, an example will be described in which a defect is detected using a backscattered electron (BSE) image formed based on the backscattered electrons detected by the detection unit 46. In monitoring based on the backscattered electrons using the electron beam, the PC 54 or the hard computer performs processing of computing and imaging the backscattered electron signal and the like to monitor the states of the powder bed and the manufactured object 38. In a case where a defect is detected by the monitoring using the backscattered electrons, the PC 54 usually acquires monitoring data immediately after melting the pre-sintered body.

1-2. Configuration Example of Control System of Three-Dimensional PBF-AM Apparatus

Next, a configuration example of a control system of the three-dimensional PBF-AM apparatus 1 will be described.

FIG. 2 is a block diagram illustrating the configuration example of the control system of the three-dimensional PBF-AM apparatus 1 of the present example. The three-dimensional PBF-AM apparatus 1 includes the detection units 46 described above. Furthermore, in FIG. 2, hardware and software parts for performing manufacturing control, which are outside the configuration of the three-dimensional PBF-AM apparatus 1 illustrated in FIG. 1, are added.

As illustrated in FIG. 2, the three-dimensional PBF-AM apparatus 1 includes a polarization amplifier control circuit 51 indicating an electron beam control unit, an analog-digital conversion circuit (ADC) 52, a preamplifier 53, the personal computer (PC) 54 indicating an example of a control unit, and a BSE monitor 55.

The polarization amplifier control circuit 51 is connected to the beam irradiation device 2 and the PC 54. Then, the polarization amplifier control circuit 51 controls the beam irradiation device 2 based on set beam scanning information. As a result, the beam irradiation device 2 irradiates a predetermined position with the electron beam 15. In addition, the polarization amplifier control circuit 51 transmits beam irradiation position information indicating an irradiation position of the electron beam 15 to the PC 54.

The preamplifier 53 is connected to the detection unit 46 and the ADC 52. Then, the preamplifier 53 converts a backscattered electron current detected by the detection unit 46 from a current signal to a voltage signal. The voltage signal converted by the preamplifier 53 is transmitted to the ADC 52. The ADC 52 converts the backscattered electron signal, which is the voltage signal, from an analog signal to a digital signal and transmits the digital signal to the PC 54.

The PC 54 is an example of an information processing apparatus, and includes a central processing unit (CPU) 54a, a read only memory (ROM) 54b, a random access memory (RAM) 54c, and a recording device 54d.

The CPU 54a reads a program code of software for implementing each function according to the present embodiment from the ROM 54b, loads the program code into the RAM 54c, and executes the program code. Variables, parameters, and the like generated during computation processing of the CPU 54a are temporarily written to the RAM 54c, and the variables, parameters, and the like are appropriately read by the CPU 54a.

An image processing unit, which is one function of the CPU 54a, acquires the image generated by the camera 42 and performs predetermined image processing on the acquired image. Then, the PC 54 outputs a camera image subjected to the image processing by the image processing unit to the BSE monitor 55. A manufacturing control software program (hereinafter, abbreviated as "manufacturing control software") read from the ROM 54b and executed by the CPU 54a controls the polarization amplifier control circuit 51. The manufacturing control software controls the preamplifier 53 via the ADC 52.

As the recording device 54d, for example, a nonvolatile recording medium such as a hard disk drive (HDD), a solid state drive (SSD), an optical disk, a magnetooptical disk, or a flash memory is used. In addition to an operating system (OS) and various parameters, a program for causing the PC 54 to function is recorded in the recording device 54d.

The ROM 54b and the recording device 54d record programs, data, and the like necessary for operation of the CPU 54a, and are used as examples of a non-transitory computer-readable storage medium storing a program to be executed by the PC 54. The recording device 54d stores the camera image generated by the image processing unit. Further, the recording device 54d stores the beam irradiation position information transmitted from the polarization amplifier control circuit 51.

The CPU 54a selects a predetermined arithmetic expression from among a plurality of arithmetic expressions according to a manufacturing process. Then, the CPU 54a performs computation processing on the backscattered electron signal by using the selected arithmetic expression to compute a computation signal. Then, the image processing unit images the computation signal to acquire a backscattered electron composition image (BSE Image). The CPU 54a outputs the acquired backscattered electron composition image (BSE image) to the BSE monitor 55. In addition, the recording device 54d stores the backscattered electron composition image (BSE image).

The BSE monitor 55 is implemented by, for example, a display such as a liquid crystal display or an organic electro luminescence display (ELD). The BSE monitor 55 displays the BSE image and the camera image output from the PC 54 on a display screen.

As an input device 56, for example, a keyboard, a mouse, or the like is used. A user can perform a predetermined input operation and issue an instruction to the PC 54 by using the input device 56.

1-3. Operation Example of Three-Dimensional PBF-AM Apparatus

Next, an operation example of the three-dimensional PBF-AM apparatus 1 will be described.

First, the user creates manufacturing data for melting according to a shape of the manufactured object 38 to be manufactured by using the manufacturing control software in the PC 54. At this time, the user inputs an appropriate melting condition including a correction function and the like. Once the creation of the manufacturing data is completed, the user causes the three-dimensional PBF-AM apparatus 1 to start manufacturing based on the manufacturing data.

Next, the beam irradiation device 2 operates based on a control command given from the PC 54 to heat the build plate 22. The beam irradiation device 2 irradiates the build plate 22 with the electron beam 15 through the opening portion 30a of the electron shield 30, and scans the build plate 22 with the electron beam 15. As a result, the build plate 22 is heated to a temperature at which the powder material 32 is pre-sintered.

Next, the powder material 32 is spread over the build plate 22. The plate moving device 26 lowers the build plate 22 by a predetermined amount by operating based on a control command given from the PC 54.

Next, the user disposes the build plate 22 covered with the powder material 32 such that an upper surface of the build plate 22 is at substantially the same height as the upper surface of the powder material 32 spread over the build table 18. Next, the user lowers the electron shield 30 to the upper surface of the build plate 22, and brings the electron shield 30 into contact with the powder material 32 so as to cover the powder material 32 present on an outer periphery of the build plate 22.

Next, the beam irradiation device 2 irradiates a region slightly narrower than the entire upper surface of the build plate 22 with the electron beam 15. That is, the region slightly narrower than the entire upper surface of the build plate 22 is a region where the electron beam 15 is not applied to the opening portion in the electron shield 30, and the beam irradiation device 2 irradiates the region with the electron beam. As described above, the beam irradiation device 2 irradiates the region slightly narrower than the entire upper surface of the build plate 22 with the electron beam 15, thereby raising the temperature of the build plate 22 in advance to a temperature at which the powder material 32 is completely pre-sintered.

At the start of manufacturing, the plate moving device 26 lowers the inner base 24 by a predetermined amount such that the upper surface of the build plate 22 is slightly lower than the upper surface of the powder material 32 spread over the build table 18. At this time, the build plate 22 is lowered by a predetermined amount $\Delta Z$ together with the inner base 24. The amount $\Delta Z$ by which the build plate 22 is slightly lowered corresponds to a thickness of a layer to be formed later in the Z direction. Then, the plate moving device 26 moves the electron shield 30 upward.

Next, the powder supply device 16 drops the powder material 32 supplied from the hopper 16a to the powder dropping device 16b onto the build table 18 by the powder dropping device 16b. Thereafter, the powder supply device 16 moves the recoater 16c from one end side to the other end side in the X direction to spread the powder material 32 over the inner base 24 to thereby form the powder bed.

As a result, the powder material 32 is spread over the build table 18 with a thickness corresponding to $\Delta Z$. The excess portion of the powder material 32 is collected in the collection box 21. After the recoater 16c moves to the outside of the electron shield 30, the powder supply device 16 lowers the electron shield 30 to the manufactured surface again, and the electron shield 30 covers the powder material 32 present on the outer periphery of the build plate 22.

Next, the beam irradiation device 2 operates based on control commands given from the polarization amplifier control circuit 51 and the PC 54 to preheat the powder layer on the build plate 22. That is, the beam irradiation device 2 performs powder-heating (P.H) on the powder layer on the build plate 22 to pre-sinter the powder material 32. When the powder material 32 is pre-sintered, the powder material 32 can have electrical conductivity. Therefore, the powder material 32 can suppress powder scattering in the sintering process performed after the preheating process.

The beam irradiation device 2 irradiates the powder material 32 spread over the build plate 22 with the electron beam 15. Furthermore, the beam irradiation device 2 performs scanning with the electron beam 15 over a wider range than a region for forming the manufactured object 38 (hereinafter, also referred to as a "manufacturing region"), which is a region where the electron beam is not applied to the opening portion in the electron shield 30. Therefore, the powder material 32 present in the manufacturing region and the powder material 32 present around the manufacturing region are both pre-sintered.

The beam irradiation device 2 melts a two-dimensional shape region by using the electron beam 15 according to a two-dimensional shape obtained by slicing a designed manufactured object prepared in advance at $\Delta Z$ intervals. After melting and solidifying the powder material 32 for one layer, the beam irradiation device 2 irradiates the region slightly narrower than the build plate 22 with the electron beam 15 again to raise the temperature, and prepares for spreading the powder material 32. After raising the temperature to a predetermined temperature, the beam irradiation device 2 turns off the electron beam 15 and moves the electron shield 30 upward.

The plate moving device 26 lowers the inner base 24 by $\Delta Z$, and moves the recoater 16c to the opposite side again along the upper surface of the powder material 32 spread over the build table 18. Then, the plate moving device 26 spreads the powder material 32 with a thickness corresponding to $\Delta Z$ on the previously formed layer, and lowers the electron shield 30 to the manufactured surface again.

The beam irradiation device 2 irradiates the region where the electron beam 15 is not applied to the opening portion in the electron shield 30 with the electron beam 15, reliably pre-sintering the powder material 32 newly spread, and then, melts a two-dimensional shape region corresponding to the layer. The beam irradiation device 2 repeats such a process to form the manufactured object 38.

In addition, the beam irradiation device 2 acquires the backscattered electron composition image (BSE image) as described below. First, the beam irradiation device 2 operates based on control commands given from the polarization amplifier control circuit 51 and the PC 54 to scan a pre-sintered region where the pre-sintered powder material 32 is present with the electron beam 15. At this time, the beam irradiation device 2 reduces the electron beam current of the electron beam 15 as much as possible, and irradiates the manufactured surface 32a in focus. The detection unit 46 detects the backscattered electrons generated by the electron beam 15. The detection unit 46 outputs the detected backscattered electron signal to the PC 54 via the preamplifier 53 and the ADC 52.

1-4.Configuration Example of Control Blocks

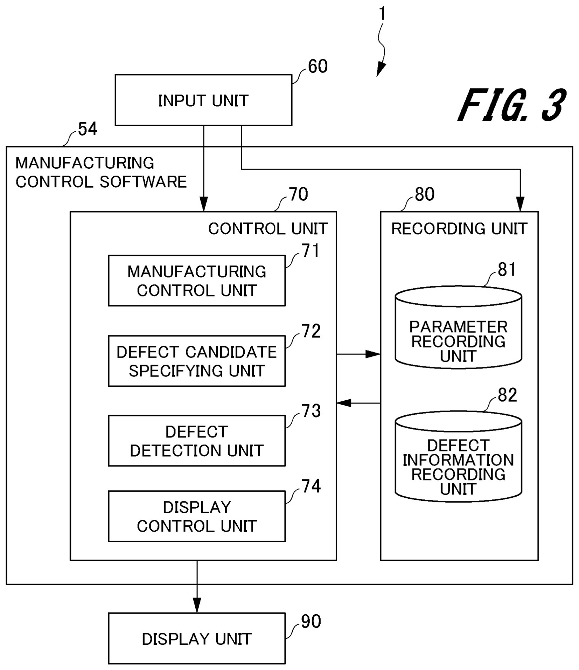

FIG. 3 is a block diagram illustrating a configuration example of control blocks of the PC 54. Defect detection processing performed by functional blocks illustrated in FIG. 3 in cooperation with each other is implemented by the CPU 54a of the PC 54 executing the manufacturing control software. Furthermore, each functional block of the PC 54 illustrated in FIG. 3 can be incorporated in the three-dimensional PBF-AM apparatus 1.

The three-dimensional PBF-AM apparatus 1 illustrated in FIG. 1 includes an input unit 60, the PC 54, and a display unit 90.

The input unit 60 has a function of enabling the user to perform an input operation, and the function is implemented by the input device 56 illustrated in FIG. 2. The input unit 60 is used by the user to perform the input operation. The input unit 60 is a functional unit of the input device 56 illustrated in FIG. 2. The input operation performed by the user includes setting of each parameter described below, defect candidate display selection, and the like. Furthermore, an instruction to display the manufactured object 38 in the middle of manufacturing or after completion of the manufacturing on the display unit 90 in two dimensions (2D) or three dimensions (3D) is also made according to the input operation performed by the user.

The PC 54 includes a control unit 70 and a recording unit 80.

The control unit 70 has a function of computation and control of each processing of the present example, and the function is implemented by the CPU 54a, the ROM 54b, and the RAM54c illustrated in FIG. 2.

The recording unit 80 has a function of recording each parameter, each data, each image, and the like of the present example, and the function is implemented by the recording device 54d illustrated in FIG. 2.

The control unit 70 includes a manufacturing control unit 71, a defect candidate specifying unit 72, a defect detection unit 73, and a display control unit 74. The recording unit 80 includes a parameter recording unit 81 and a defect information recording unit 82.

The parameter recording unit 81 records a parameter such as a threshold to be compared in each processing described below.

The defect information recording unit 82 records defect information including the layer data, a defect candidate specified by the defect candidate specifying unit 72, a defect detection result, and the like. The defect information includes at least one of the number of defects, a position of the defect, a manufactured object volume, a volumetric defect ratio, an area defect ratio, and a maximum length of the defect, detected by the defect detection unit 73.

The manufacturing control unit 71 controls processing related to PBF-AM performed by the three-dimensional PBF-AM apparatus 1, such as processing performed by the beam irradiation device 2 and the plate moving device 26 described above. Furthermore, after melting is performed in PBF-AM processing, the manufacturing control unit 71 controls the beam irradiation device 2 such that the detection unit 46 detects the backscattered electrons generated by scanning the manufactured surface with an emission current low enough to detect the backscattered electrons, and acquires a backscattered electron image. In a case where a height of a recess or a protrusion on the surface of a layer exceeds a predetermined threshold, the manufacturing control unit 71 records, in the defect information recording unit 82, the layer data indicating that the manufactured surface is determined to have unevenness. However, the defect information recording unit 82 also records the layer data indicating that the manufactured surface is not determined to have unevenness.

The defect candidate specifying unit 72 reads, from the defect information recording unit 82, the layer data acquired for each layer of the manufactured object 38 manufactured by the PBF-AM, and detects a defective portion of the layer as the defect candidate for each layer based on the layer data. In addition, the defect candidate specifying unit 72 specifies a plurality of defect candidates at substantially the same positions in a plurality of layers adjacent in a stacking direction.

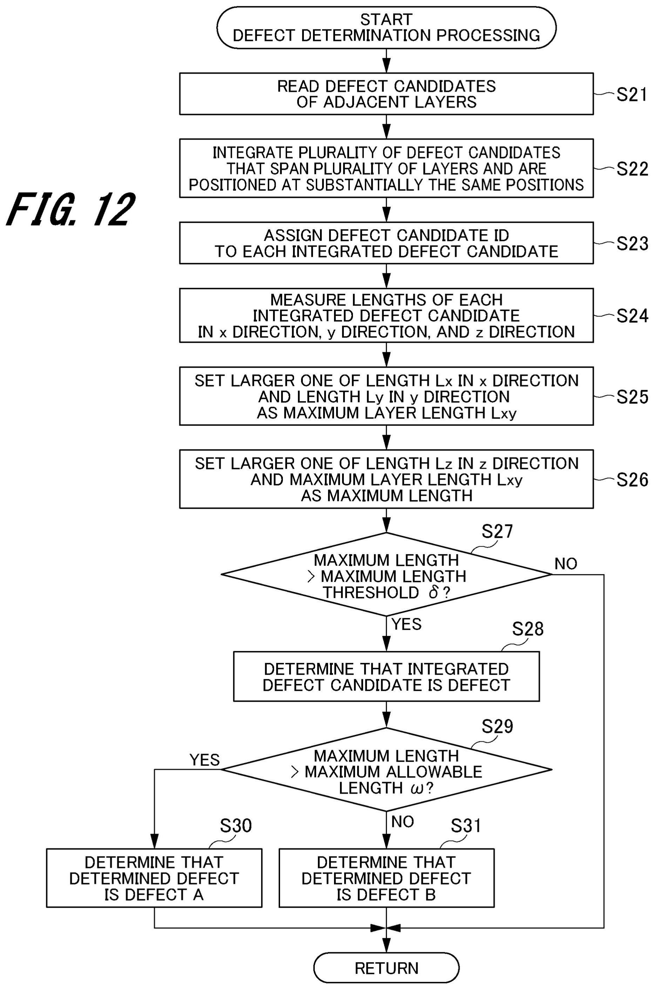

The defect detection unit 73 detects a defect remaining in the manufactured object 38 based on a size of the plurality of defect candidates positioned at substantially the same positions and specified in the plurality of layers in the stacking direction and a size of the defect candidate in a layer. Here, the defect detection unit 73 integrates the plurality of defect candidates at substantially the same positions in the stacking direction, and assigns a defect candidate identifier (for example, ID1 to ID4) to each integrated defect candidate. Further, the defect detection unit 73 measures a stacking direction length ($Lz$) of the integrated defect candidate, and a first direction length (a length $Lx$ in the X direction) and a second direction length (a length $Ly$ in the Y direction) in a layer in directions intersecting the stacking direction of the integrated defect candidate for each layer, and sets the largest length among the first direction length ($Lx$) and the second direction length ($Ly$) as a maximum layer length ($Lxy$). The defect detection unit 73 sets a longer length among the stacking direction length ($Lz$) and the maximum layer length ($Lxy$) as a maximum length, and detects the integrated defect candidate as the defect in a case where the maximum length exceeds a maximum length threshold ($\delta$). Furthermore, as illustrated in FIG. 12 described below, the defect detection unit 73 determines a defect whose maximum length exceeds a maximum allowable length ($\omega$) as a first defect (defect A) which is not allowed to remain in the manufactured object 38. The defect detection unit 73 determines a defect whose maximum length does not exceed the maximum allowable length ($\omega$) as a second defect (defect B) which is allowed to remain in the manufactured object 38.

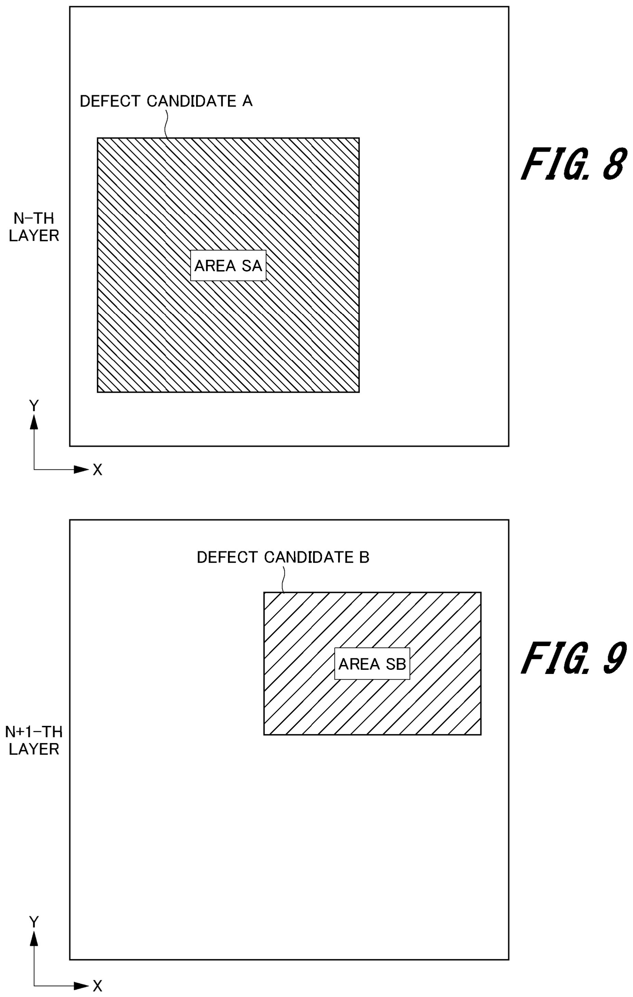

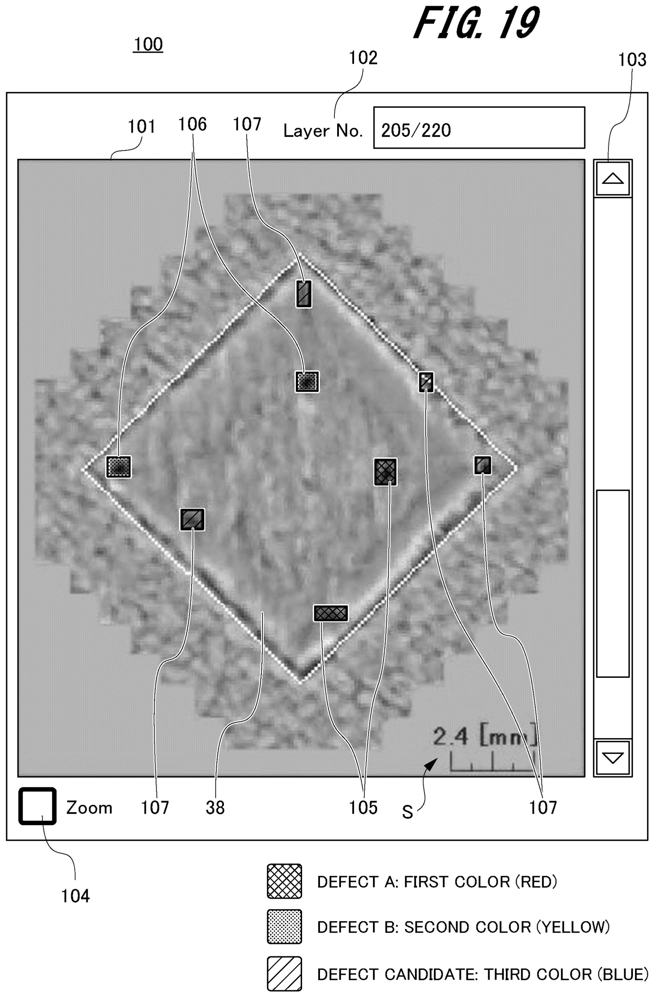

The display control unit 74 controls a display form of the image to be displayed on the display unit 90 based on the layer data and the defect information read from the defect information recording unit 82 and the input operation input from the input unit 60. For example, the display control unit 74 generates a 2D image, a 3D image, a graph, and the like of the manufactured surface of the manufactured object 38, and generates a screen (an example of a visualized image) for displaying such images on the display unit 90. Furthermore, the display control unit 74 also performs control (such as enlargement and reduction of an image, and movement of an image to be displayed) to change a display content of the screen according to the input operation. Therefore, the display control unit 74 generates the visualized image obtained by visualizing the defect information including at least one of the first defect (defect A) and the second defect (defect B) illustrated in FIG. 19 described below, and performs control such that the visualized image can be displayed on the display unit 90 during the PBF-AM. The display control unit 74 can display information such as the state of the manufactured object 38, a shape of the defect candidate (for examples, FIGS. 8 to 11, and 15 described below), the presence or absence of a defect detected, and various graphs on various screens of the display unit 90 even during the PBF-AM processing, and can allow the user to confirm the displayed information.

The display unit 90 has a function of displaying the image processed by the PC 54, and the function is implemented by the BSE monitor 55 illustrated in FIG. 2. For example, a liquid crystal display device or an organic EL display device is used for the display unit 90. In a case where a touch panel display is used for the PC 54, the input unit 60 and the display unit 90 are integrally formed.

In FIG. 3, the PC 54 includes the recording unit 80, but the recording unit 80 may also be implemented in an external recording medium outside the PC 54. In this case, the control unit 70 reads and processes data such as the parameter, the layer data, and the defect information recorded in the external recording medium.

1-5.Example of Defect Detection Processing

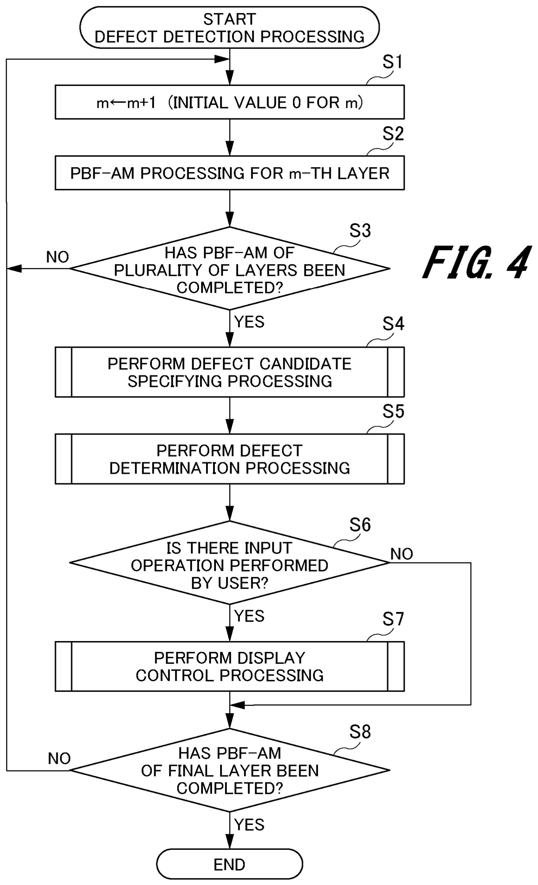

Next, an example of the defect detection processing will be described with reference to the flowcharts in FIG. 4 and subsequent figures and explanatory diagrams. In the following description, only an operation of a portion related to defect detection, which is different from that according to the related art, will be described. The other portions related to the manufacturing process are the same as the contents described in the section of the related art, and thus, description thereof is omitted. The PC 54 (manufacturing control software) of the present example can perform defect detection in real time during the PBF-AM of the manufactured object 38.

FIG. 4 is a flowchart illustrating an example of the defect detection processing. The defect detection processing is an example of a defect detection method performed by the control unit 70.

First, the manufacturing control unit 71 illustrated in FIG. 3 sets an initial value 0 for m representing an m-th layer and substitutes m+1 to set the m-th layer as a first layer (S1). Next, the manufacturing control unit 71 performs the above-described PBF-AM processing for the first layer (S2).

Next, the manufacturing control unit 71 determines whether or not the PBF-AM processing of a plurality of layers has been completed (S3). In a case where the PBF-AM processing of the plurality of layers has not been completed (NO in S3), that is, in a case where only the PBF-AM processing of the first layer has been completed, the processing returns to step S1, and the PBF-AM processing of the second and subsequent layers is performed. On the other hand, in a case where the PBF-AM processing of the plurality of layers has been completed (YES in S3), the processing proceeds to step S4.

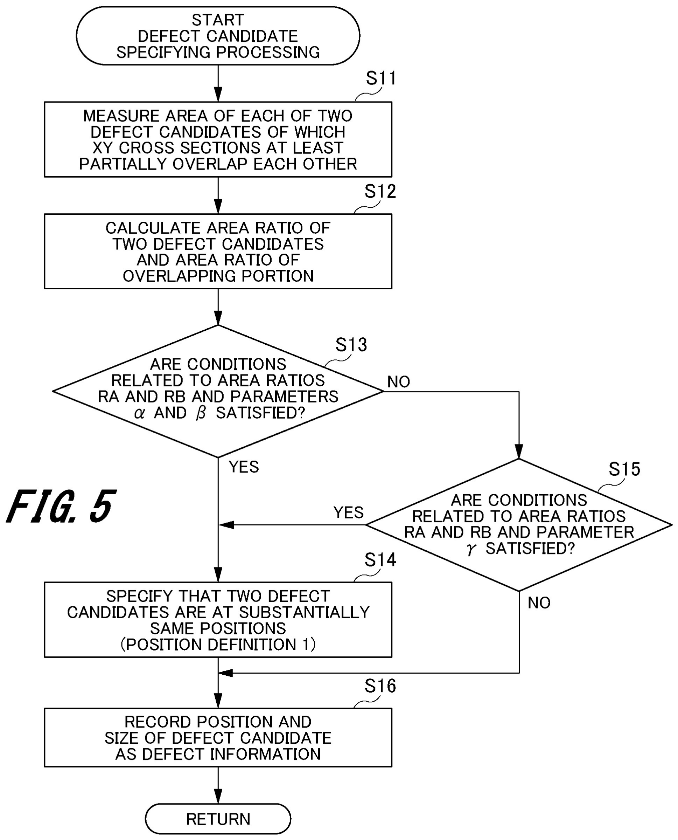

Next, the defect candidate specifying unit 72 performs a defect candidate specifying processing illustrated in FIG. 5 (S4). Here, the defect candidate specifying processing will be described in detail.

FIG. 5 is a flowchart illustrating an example of the defect candidate specifying processing. Such defect candidate specifying processing is a subroutine of step S4 in FIG. 4.

First, the defect candidate specifying unit 72 measures an area of each of two defect candidates which are adjacent to each other in the stacking direction and of which XY cross sections at least partially overlap each other (S11). Here, the area of the defect candidate will be described.

The defect candidate specifying unit 72 specifies a position of the defect candidate based on the layer data obtained at the time of manufacturing each layer. The defect candidate specifying unit 72 assumes that the positions of the defect candidates are substantially the same positions in the XY cross sections in the plurality of layers, and does not consider positions (Z coordinate) in the Z direction. Here, attention is paid to the positions in the XY cross section in the plurality of layers, and an area by which a plurality of defect candidates overlap each other in adjacent layers is considered.

However, two defect candidates overlapping in adjacent layers do not always have the same size. Therefore, the defect candidate specifying unit 72 sets, as a defect candidate A, a defect candidate having a larger size in the XY cross section and sets, as a defect candidate B, a defect candidate having a smaller size in the XY cross section among the two defect candidates. Here, as an example of the layers adjacent to each other in the Z direction, a powder layer of an N-th layer (N is an integer of 1 or more) and a powder layer of an N+1-th layer are described. In the following description, the powder layer of the N-th layer and the powder layer of the N+1-th layer are abbreviated as the N-th layer and the N+1-th layer, respectively.

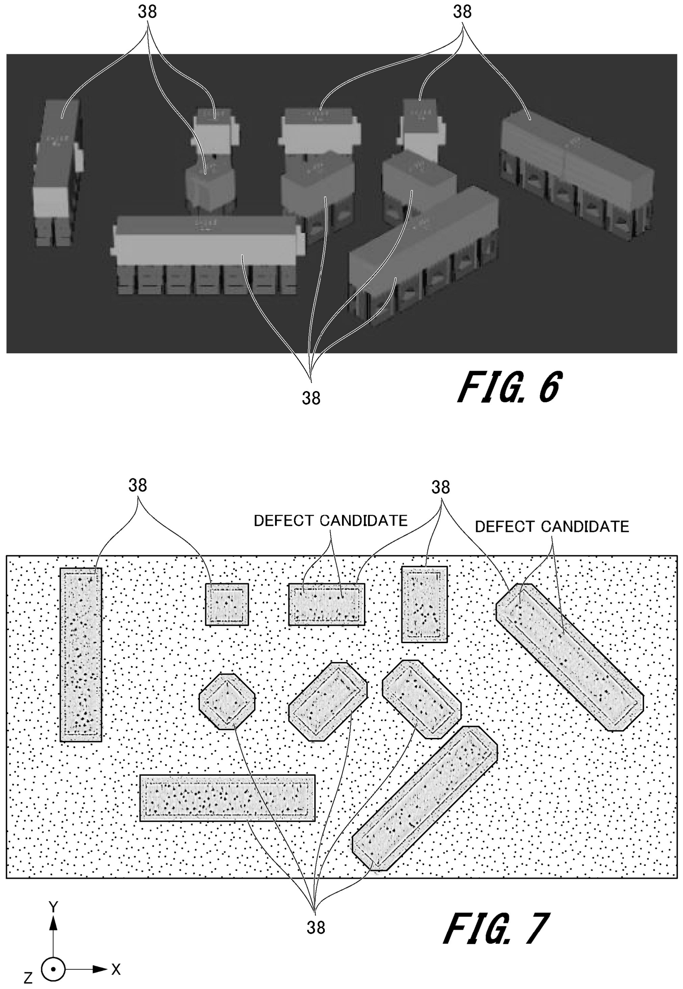

Here, the manufactured object 38 and the defect candidate will be described with reference to FIGS. 6 to 11.

FIG. 6 is a perspective view of the manufactured object 38. In the perspective view, a plurality of manufactured objects 38 to be manufactured by one PBF-AM processing are displayed in 3D based on computer aided design (CAD) data. In this example, a total of 10 manufactured objects 38 are to be manufactured by the PBF-AM. Every time melting of one layer of the manufactured object 38 is completed, the manufacturing control unit 71 illustrated in FIG. 3 acquires the BSE image of the manufactured object 38 as the layer data and records the BSE image in the defect information recording unit 82. For example, when the manufacturing control unit 71 simultaneously performs the PBF-AM for 10 manufactured objects 38 as illustrated in FIG. 6, the BSE images of 10 manufactured objects 38 are acquired as the layer data and recorded in the defect information recording unit 82.

FIG. 7 is a view illustrating an example of a BSE image of the manufactured object 38 when viewed from above in the Z direction during the PBF-AM. Since the PBF-AM is being performed, the manufactured surface of the manufactured object 38 is visible in the BSE image. Black spots are faintly observed on an upper portion of the manufactured object 38. The black spots are unevenness occurring on the manufactured surface during the PBF-AM and are recorded in the layer data by the manufacturing control unit 71 as described above. Then, the defect candidate specifying unit 72 specifies the black spot as the defect candidate.

FIG. 8 is a diagram illustrating an example of a BSE image in which the defect candidate A occurring in the N-th layer is confirmed.

FIG. 9 is a diagram illustrating an example of a BSE image in which the defect candidate B occurring in the N+1-th layer is confirmed.

As described above, since an area of the defect candidate occurring in the N-th layer is larger than that of the defect candidate occurring in the N+1-th layer, the defect candidate occurring in the N-th layer is referred to as the defect candidate A, and the defect candidate occurring in the N+1-th layer is referred to as the defect candidate B. A positional relationship between the defect candidate A and the defect candidate B in the Z direction is not important, and the defect candidate A and the defect candidate B are discriminated by the defect candidate specifying unit 72 only by the size in the XY cross section.

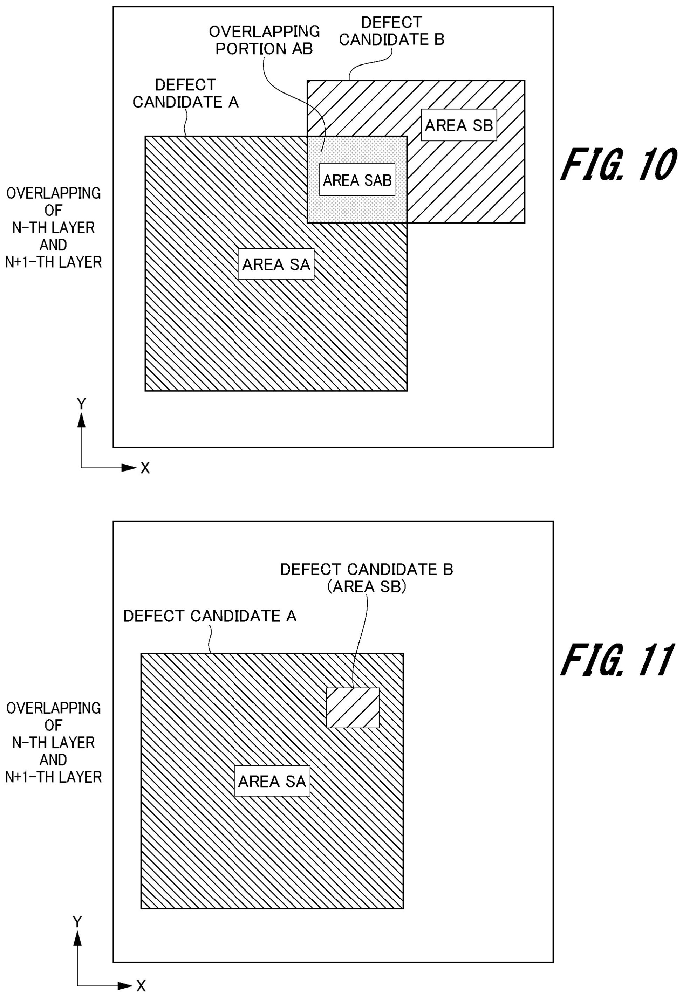

FIG. 10 is a diagram illustrating an example of a BSE image of the defect candidate A and the defect candidate B confirmed when the N-th layer and the N+1-th layer are superimposed.

The positions of the defect candidate A and the defect candidate B in the XY cross section are shifted, but the defect candidate A and the defect candidate B partially overlap each other. A portion where the defect candidate A and the defect candidate B overlap each other is referred to as an overlapping portion AB. The defect candidate specifying unit 72 measures an area SA of the defect candidate A, an area SB of the defect candidate B, and an area SAB of the overlapping portion AB in the XY cross section for each layer based on the layer data.

In step S11, the defect candidate specifying unit 72 measures the area (SA) of the N-th layer defect candidate specified in the N-th layer and the area (SB) of the N+1-th layer defect candidate specified in the N+1-th layer among the plurality of defect candidates overlapping each other in the plurality of layers adjacent in the stacking direction. Then, the defect candidate specifying unit 72 calculates the overlapping area (SAB) of the overlapping portion where the N-th layer defect candidate and the N+1-th layer defect candidate overlap each other in the stacking direction.

Next, the defect candidate specifying unit 72 calculates an area ratio of the two defect candidates and an area ratio of the overlapping portion AB (S12). Here, the defect candidate specifying unit 72 calculates a ratio (RA) of the overlapping area to the area of the N-th layer defect candidate and a ratio (RB) of the overlapping area to the area of the N+1-th layer defect candidate as the area ratios. Therefore, the defect candidate specifying unit 72 represents, as RA, the area ratio of the overlapping portion AB to the defect candidate A. The area ratio RA is calculated by the following formula (1).

$$RA = SAB/SA \ ...(1)$$

Similarly, the defect candidate specifying unit 72 represents, as RB, the area ratio of the overlapping portion AB to the defect candidate B. The area ratio RB is calculated by the following formula (2).

$$RB = SAB/SB \ ...(2)$$

Next, the defect candidate specifying unit 72 determines whether or not conditions related to the area ratios RA and RB and parameters $\alpha$ and $\beta$ are satisfied (S13). The parameter $\alpha$ is an example of an area ratio threshold to be compared with the area ratio RA, and the parameter $\beta$ is an example of an area ratio threshold to be compared with the area ratio RB.

In a case where it is determined that the conditions related to the area ratios RA and RB and the parameters $\alpha$ and $\beta$ are satisfied (YES in S13), the defect candidate specifying unit 72 specifies that the two defect candidates A and B are at substantially the same positions (S14).

For example, in the parameter recording unit 81, a total of two area ratio thresholds respectively serving as thresholds for the area ratios RA and RB are recorded. An area ratio threshold parameter serving as the threshold for the area ratio RA is denoted by $\alpha$, and an area ratio threshold parameter serving as the threshold for the area ratio RB is denoted by $\beta$. The area ratio threshold parameter $\alpha$ is used as an example of a first area threshold, and the area ratio threshold parameter $\beta$ is used as an example of a second area threshold. In a case where the ratio RA of the overlapping area is equal to or larger than the first area threshold ($\alpha$) and the ratio RB of the overlapping area to the area of the N+1-th layer defect candidate is equal to or larger than the second area threshold ($\beta$), the defect candidate specifying unit 72 specifies that the N-th layer defect candidate and the N+1-th layer defect candidate are at substantially the same positions.

For example, in a case where the following Condition (3) is satisfied, the defect candidate specifying unit 72 defines that the two defect candidates A and B are at substantially the same positions.

$$RA \geq \alpha \ and \ RB \geq \beta,$$

$$RA \geq \alpha \ and \ RB > \beta,$$

$$RA > \alpha \ and \ RB > \beta, \ or$$

$$RA > \alpha \ and \ RB \geq \beta \ ...(3)$$

In a case where the conditions related to the area ratios RA and RB and the parameters $\alpha$ and $\beta$ are not satisfied in step S13 (NO in S13), the defect candidate specifying unit 72 determines whether or not conditions related to the area ratios RA and RB and a parameter $\gamma$ are satisfied (S15). In a case where it is determined that the conditions related to the area ratios RA and RB and the parameter $\gamma$ are satisfied (YES in S15), the defect candidate specifying unit 72 specifies that the two defect candidates A and B are at substantially the same positions (S14).

In FIG. 10, a case where the sizes of the defect candidates A and B are not extremely different has been described. However, in the actual PBF-AM processing, the sizes of the defect candidates A and B may be extremely different from each other. In order to enable the defect candidate specifying unit 72 to specify that the defect candidates A and B are at substantially the same positions even in such a case, the area ratio threshold parameter $\gamma$ is recorded in the parameter recording unit 81 separately from the area ratio threshold parameters $\alpha$ and $\beta$. Here, the parameter $\gamma$ will be described with reference to FIG. 11.

FIG. 11 is a diagram illustrating examples of the defect candidates A and B having extremely different sizes.

In the example illustrated in FIG. 11, the position of the defect candidate B is a position included in the defect candidate A, and the defect candidate A is extremely larger than the defect candidate B. In this case, although the area ratio RA is smaller than the area ratio threshold parameter $\alpha$, the area ratio RB is larger than the area ratio threshold parameter $\beta$, and thus Condition (3) is not satisfied. However, as can be seen from FIG. 11, the defect candidates A and B are considered to be at substantially the same positions.

Therefore, the area ratio threshold parameter $\gamma$ is recorded in the parameter recording unit 81 separately from the area ratio threshold parameters $\alpha$ and $\beta$. In a case where the following Condition (4) is satisfied and one of the area ratio RA and the area ratio RB is larger than the area ratio threshold parameter $\gamma$, the defect candidate specifying unit 72 defines that the two defect candidates are at substantially the same positions regardless of the other one of the area ratio RA and the area ratio RB.

$$RA > \gamma \ or \ RB > \gamma \ ...(4)$$

A definition by which the defect candidate specifying unit 72 obtains substantially the same positions of two defect candidates using Formulas (1) and (2), and Condition (3) or (4) is referred to as "position definition 1".

After step S14 or in a case where the defect candidate specifying unit 72 determines that the conditions related to the area ratios RA and RB and the parameter $\gamma$ are not satisfied (NO in S15), the defect candidate specifying unit 72 records the position and size of the specified defect candidate as the defect information in the defect information recording unit 82 (S16), and the processing proceeds to step S5 in FIG. 4. In step S5, the defect detection unit 73 performs defect determination processing.

Note that the reason why the defect information is recorded in the defect information recording unit 82 also in a case where negative determination (NO) is made in step S15 is that there is a possibility that a defect candidate specified at the time of sintering of the next layer overlaps with the current defect candidate.

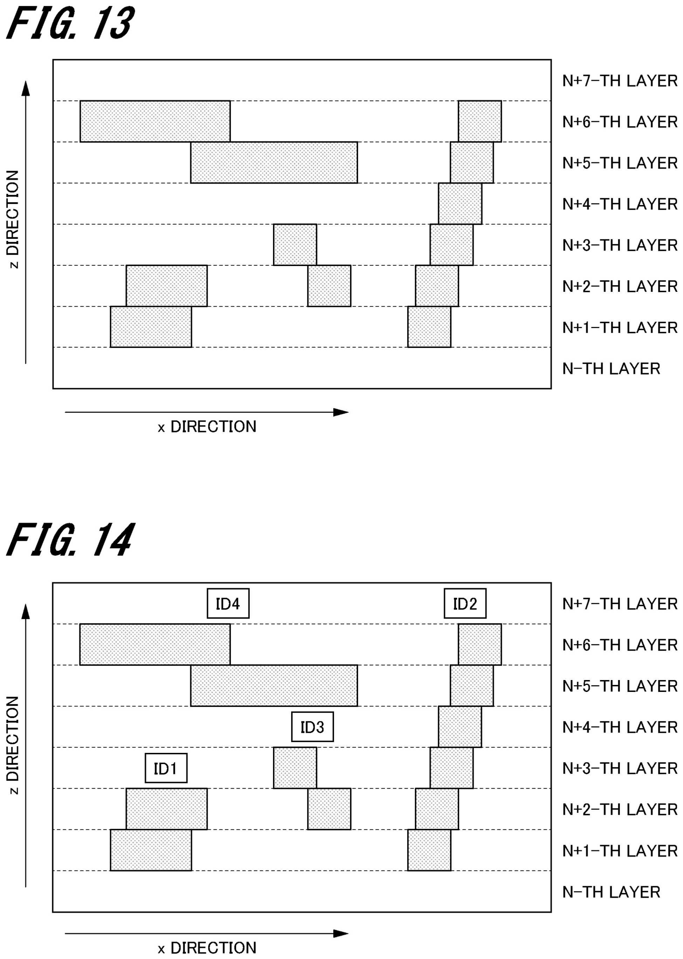

Next, processing in which the defect detection unit 73 detects the defect among the defect candidates will be described with reference to FIGS. 12 to 14, taking an xz cross-sectional view of a part of the manufactured object 38 stacked from the N-th layer to an N+7-th layer as an example. In FIG. 13 and subsequent figures, a defect detection range of the defect detection unit 73 corresponds to the first to eighth layers in a case where N is 1.

FIG. 12 is a flowchart illustrating an example of the defect determination processing. The defect determination processing is a subroutine of step S5 in FIG. 4. In the following description of the flowchart and the xz cross-sectional views, for convenience of description, the directions are expressed in lower case like x, y, and z directions, but it is assumed that the directions represent the same directions as the X, Y, and Z directions illustrated in FIG. 1 and the like.

First, the defect detection unit 73 reads the defect information including the defect candidates of adjacent layers from the defect information recording unit 82 (S21). However, the defect detection unit 73 may directly acquire the defect information output from defect candidate specifying unit 72.

Next, the defect detection unit 73 integrates a plurality of defect candidates that span a plurality of layers and are positioned at substantially the same positions (S22). Next, the defect detection unit 73 assigns the defect candidate ID to each integrated defect candidate (S23). Here, a specific example of the processing in steps S22 and S23 will be described with reference to FIGS. 13 and 14.

FIG. 13 is a diagram illustrating an example of the defect candidates that span the plurality of layers.

A broken line illustrated in the figure represents a boundary between the layers. A rectangular frame defined by a solid line represents the defect candidate occurring in each layer. At this time, the defect candidate has already been specified by the defect candidate specifying unit 72.

FIG. 14 is a diagram illustrating an example of the defect candidate ID assigned to the defect candidate integrated by the defect detection unit 73.

The defect detection unit 73 integrates the defect candidates that span the plurality of layers and are at substantially the same positions according to the above-described position definition 1. The defect detection unit 73 assigns the defect candidate ID to each integrated defect candidate.

In the PBF-AM processing, the powder layers are stacked in the order of the N-th layer, the N+1-th layer, and the like. At this time, the defect candidate specified in the N+1-th layer and the defect candidate specified in the N+2-th layer have already been determined to be at substantially the same positions defined by the position definition 1 by the processing in the defect candidate specifying unit 72. Therefore, the defect detection unit 73 integrates two defect candidates positioned at substantially the same positions. Then, the defect detection unit 73 assigns the defect candidate ID1 and the defect candidate ID2 to the respective defect candidates integrated in the N+1-th layer and the N+2-th layer.

The defect detection unit 73 also integrates the defect candidate specified in the N+3-th layer and positioned at substantially the same position as the defect candidate specified for the first time in the N+2-th layer with the defect candidate specified in the N+2-th layer, and assigns a defect candidate ID3 to the integrated defect candidate. Similarly, the defect detection unit 73 also integrates the defect candidate specified in the N+6-th layer at substantially the same position as the defect candidate specified for the first time in the N+5-th layer with the defect candidate specified in the N+5-th layer, and assigns a defect candidate ID4 to the integrated defect candidate. Note that the same defect candidate ID is assigned to the defect candidates integrated by the defect detection unit 73 as long as the layers are continuous.

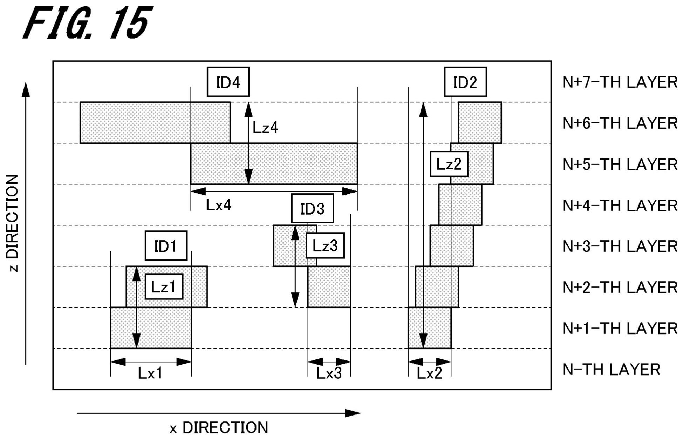

Returning to FIG. 12, the description will be continued. After assigning the defect candidate ID in step S23, the defect detection unit 73 measures lengths of each integrated defect candidate in the X direction, the Y direction, and the Z direction (S24). Here, processing in which the defect detection unit 73 measures the lengths in the X direction, the Y direction, and the Z direction will be described with reference to FIG. 15.

FIG. 15 is a diagram illustrating an example in which the lengths of the defect candidate in the X direction, the Y direction, and the Z direction are measured, the defect candidate being integrated by the defect detection unit 73.

The defect detection unit 73 measures the lengths of each integrated defect candidate in the X direction and the Y direction, and a length $Lz$ of each integrated defect candidate in the Z direction. For example, the defect detection unit 73 measures, as $Lz1$, the length of the integrated defect candidate to which the defect candidate ID1 is assigned in the Z direction, and measures, as $Lx1$, the length of the integrated defect candidate to which the defect candidate ID1 is assigned in the X direction. In FIG. 15, the length in the Y direction, which is the depth direction of the drawing, is not illustrated, but the defect detection unit 73 measures the length in the Y direction as $Ly1$.

Similarly to the defect candidate with the defect candidate ID1, the defect detection unit 73 measures, as $Lz2$, the length of the integrated defect candidate to which the defect candidate ID2 is assigned in the Z direction, and measures, as $Lx2$, the length of the integrated defect candidate to which the defect candidate ID2 is assigned in the X direction. In addition, the defect detection unit 73 measures, as $Lz3$, the length of the integrated defect candidate to which the defect candidate ID3 is assigned in the Z direction, and measures, as $Lx3$, the length of the integrated defect candidate to which the defect candidate ID3 is assigned in the X direction. In addition, the defect detection unit 73 measures, as $Lz4$, the length of the integrated defect candidate to which the defect candidate ID4 is assigned in the Z direction, and measures, as $Lx4$, the length of the integrated defect candidate to which the defect candidate ID4 is assigned in the X direction.

In a case where the defect candidate IDs are not distinguished in the following description, the length of the integrated defect candidate in the X direction is referred to as a "length $Lx$", the length of the integrated defect candidate in the Y direction is referred to as a "length $Ly$", and the length of the integrated defect candidate in the Z direction is referred to as a "length $Lz$", without adding the defect candidate ID.

Returning to FIG. 12, the description will be continued.

After the processing of step S24, the defect detection unit 73 calculates a larger one of the length $Lx$ in the X direction and the length $Ly$ in the Y direction, which are measured for each layer, as the "maximum layer length $Lxy$" (S25). The maximum layer length $Lxy$ is a larger one of a maximum layer length $Lxmax$ of the defect candidate in the X direction and a maximum layer length $Lymax$ of the defect candidate in the Y direction. Here, the maximum layer length $Lxmax$ represents the largest length among the plurality of lengths $Lx$. The maximum layer length $Lymax$ represents the largest length among the plurality of lengths $Ly$.

Next, the defect detection unit 73 compares the length $Lz$ in the Z direction with the maximum layer length $Lxy$, and sets the larger one as the "maximum length" (S26). Next, the defect detection unit 73 determines whether or not the maximum length exceeds the maximum length threshold $\delta$ read from the parameter recording unit 81 (S27).

In a case where it is determined that the following Condition (5) that the maximum length exceeds the maximum length threshold $\delta$ is satisfied (YES in S27), the defect detection unit 73 determines that the integrated defect candidate is a defect (S28).

$$\text{Maximum length} > \text{Maximum length threshold } \delta \quad ...(5)$$

On the other hand, in a case where it is determined that Condition (5) that the maximum length exceeds the maximum length threshold $\delta$ is not satisfied (NO in S27), the defect detection unit 73 does not determine that the integrated defect candidate is a defect, and the processing proceeds to step S6 in FIG. 4. The integrated defect candidate that is not determined as a defect by the defect detection unit 73 is continuously referred to as the defect candidate. This is because there is a possibility that the defect candidate that has not been regarded as a defect in the determination in step S27 is newly determined as a defect by the defect detection unit 73 as a result of the PBF-AM processing of the next and subsequent layers after the defect determination processing illustrated in FIG. 12.

After determining the integrated defect candidate as a defect in step S28, the defect detection unit 73 determines whether or not the maximum length of the integrated defect candidate exceeds the maximum allowable length $\omega$ (S29). The maximum allowable length $\omega$ is an upper limit value of a length that allows the integrated defect candidate to be an allowable defect. For example, a defect whose maximum length is larger than the maximum allowable length ω becomes a factor of deteriorating a fatigue strength of the manufactured object 38. On the other hand, a defect whose maximum length is equal to or smaller than the maximum allowable length ω is allowed to remain in the manufactured object 38.

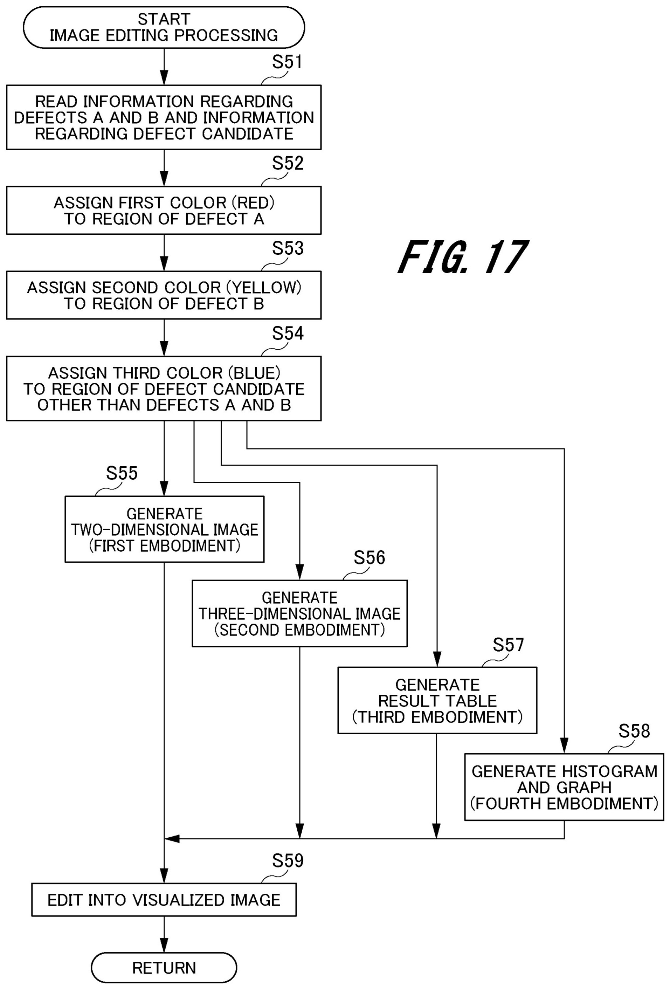

In a case where the maximum length exceeds the maximum allowable length ω (YES in S29), the defect detection unit 73 determines that the determined defect is the defect A (first defect) (S30). On the other hand, in a case where the maximum length is equal to or smaller than the maximum allowable length ω (NO in S29), the defect detection unit 73 determines that the determined defect is the defect B (second defect) (S31). Since information regarding the defect A or the defect B is used in image editing processing illustrated in FIG. 17 described below, the information is recorded in the defect information recording unit 82. After step S30 or S31, the defect detection unit 73 advances the processing to step S6 in FIG. 4.

After step S5 in FIG. 4, the display control unit 74 determines whether or not there is an input operation performed by the user (S6). In a case where it is determined that there is an input operation performed by the user (YES in S6), the display control unit 74 proceeds to the processing of step S7 and performs display control processing. On the other hand, in a case where it is determined that there is no input operation performed by the user (NO in S6), the display control unit 74 advances the processing to step S8.

Here, the display control processing (the processing of step S7) performed in a case where it is determined in step S6 that there is an input operation performed by the user will be described.

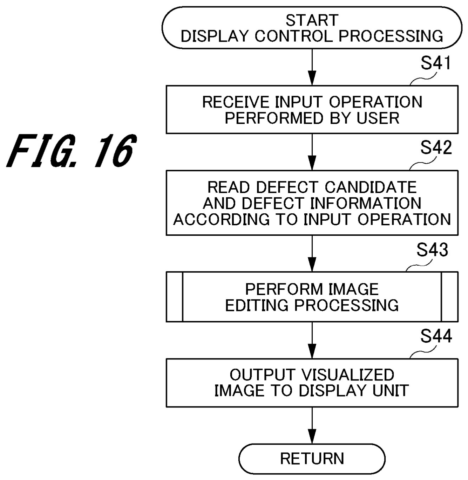

FIG. 16 is a flowchart illustrating an example of the display control processing. Such display control processing is a subroutine of step S7 in FIG. 4.

First, the display control unit 74 receives an input operation performed by the user (S41). Next, the display control unit 74 reads the defect candidate and the defect information from the defect information recording unit 82 according to the input operation (S42).

Next, the display control unit 74 performs the image editing processing for editing the defect candidate and the defect information into the visualized image (S43). At this time, the display control unit 74 performs the image editing processing of editing a 2D or 3D display image of the defect candidate and the defect information, and an image obtained by expressing various types of information as a graph to generate a screen that can be displayed on the display unit 90. Here, the image editing processing will be described in detail.

FIG. 17 is a flowchart illustrating an example of the image editing processing. Such image editing processing is a subroutine of step S43 in FIG. 16.

First, the display control unit 74 reads the information regarding the defects A and B and information regarding the defect candidate from the defect information recording unit 82 (S51). The information read from the defect information recording unit 82 by the display control unit 74 also includes the layer data and BSE image data.

Next, the display control unit 74 assigns a first color (red) to a region of the defect A (S52). Next, the display control unit 74 assigns a second color (yellow) to a region of the defect B (S53). Next, the display control unit 74 assigns a third color (blue) to a region of the defect candidate other than the defects A and B (S54).

Next, the image and the like generated by the display control unit 74 according to the first to fourth embodiments will be collectively described. The display control unit 74 according to the first embodiment generates a two-dimensional image to be displayed on a BSE image display section 101 (an example of a first defect display section illustrated in FIG. 19) that displays the defect information detected in the stacking direction by the defect detection unit, and the first defect (defect A) and the second defect (defect B), which are subjected to highlighting processing, based on the layer data for the layer instructed by the input unit 60 (S55). Then, the display control unit 74 edits, as the visualized image, a two-dimensional defect display screen 100 (an example of a two-dimensional defect display screen illustrated in FIG. 19) including the first defect display section and the first stacking number designation section 103 with which the user designates a stacking number of the layer (S59). The highlighting processing according to the first embodiment is processing of surrounding each of the first defect (defect A) and the second defect (defect B) with a rectangular frame or applying different colors as illustrated in FIG. 19 described below.

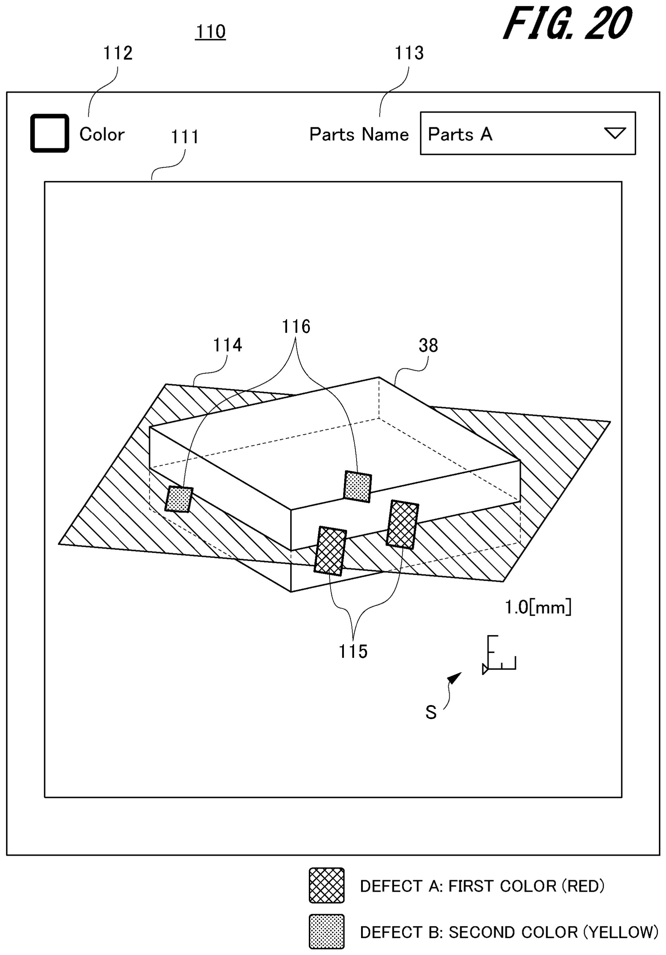

A display control unit 74 according to a second embodiment acquires layer data associated with identification information of a manufactured object 38 instructed by an input unit 60, and generates a three-dimensional image to be displayed on a BSE image display section 111 (an example of a second defect display section illustrated in FIG. 20 described below) based on the layer data for a layer instructed by the input unit 60 (S56). The BSE image display section 111 is a display section that displays defect information detected in a stacking direction by a defect detection unit 73, a first defect (defect A) and a second defect (defect B), which are subjected to highlighting processing, and the three-dimensional image of the manufactured object 38. Then, the display control unit 74 edits, as a visualized image, a three-dimensional defect display screen 110 (an example of a three-dimensional defect display screen illustrated in FIG. 20 described below) including a second stacking number designation section 114 that designates a stacking number of the layer (S59). The highlighting processing according to the second embodiment is also processing of surrounding each of the first defect (defect A) and the second defect (defect B) with a rectangular frame or applying different colors as illustrated in FIG. 20 described below.

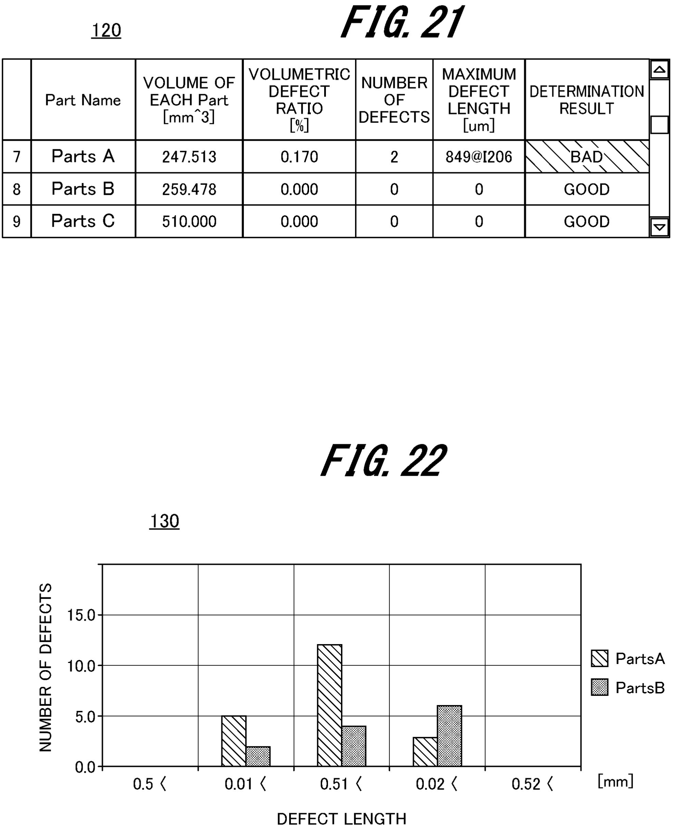

A display control unit 74 according to a third embodiment generates a table of defect detection results (referred to as a result table) including defect information determined for each layer and information including a progress status of PBF-AM processing for a manufactured object 38 based on layer data (S57), and edits the result table into a visualized image including the result table (S59). Here, the information including the progress status of the PBF-AM processing includes either information indicating that a fatal defect has occurred in the PBF-AM processing (BAD in FIG. 21 described below) or information indicating that the PBF-AM processing has been normally performed (GOOD in FIG. 21 described below).

A display control unit 74 according to the fourth embodiment generates a histogram and a graph representing a defect detection result (S58). The display control unit 74 generates the histogram representing a relationship between a length (for example, a maximum length of an integrated defect candidate) of a defect determined for each layer and the number of defects based on layer data for a layer of each manufactured object 38. Furthermore, the display control unit 74 generates the graph of at least one of the number of defects, a defect area, and an area defect ratio determined for each layer based on the layer data for the layer of each manufactured object 38. Then, the display control unit 74 edits the histogram into a visualized image including the histogram or edits the graph into a visualized image including the graph (S59).

When any one of steps S55 to S58 ends as described above, the display control unit 74 corresponding to each embodiment edits the generated image, result table, or histogram and graph into the visualized image (S59), and advances the processing to step S44 in FIG. 16.

The description returns to FIG. 16.

After the image editing processing in step S43, the display control unit 74 outputs the image visualized in step S43 to the display unit 90 (see FIG. 3) (S44), thereby performing control such that the visualized image can be displayed on the display unit 90 during the PBF-AM. Thereafter, the display control unit 74 advances the processing to step S8 in FIG. 4. For example, as the image obtained by visualizing the defect candidate and the defect information, a screen including an image obtained by forming a plurality of stacked layers into a three-dimensional image, a graph of the defect information for each layer, and the like is displayed on the display unit 90. The defect determined by the defect detection unit 73 is displayed on the display unit 90 as error information. Therefore, even during the PBF-AM, the user can confirm the defect candidate and the defect information online.

Here, the color assigned by the display control unit 74, and a comparison table and a comparison graph that are generated will be described in detail.

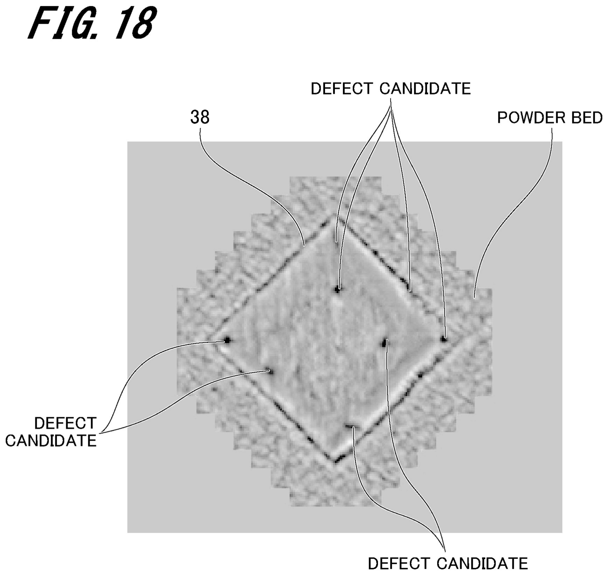

FIG. 18 is a view illustrating an example of a BSE image of the manufactured object 38 when viewed from above in the Z direction during the PBF-AM.

FIG. 18 is an enlarged view of the manufactured surface of the manufactured object 38, which is obtained by BSE-imaging the manufactured object 38 after melting of a certain layer and the periphery thereof among the plurality of layers of the manufactured object 38 having a quadrangular prism shape illustrated in FIG. 7.

Since the manufactured object 38 is being manufactured, a square edge of the manufactured surface of the manufactured object 38 is observed as a dark line in the BSE image. Unevenness is observed as black spots on the manufactured surface. The powder bed appears at a faint portion around the manufactured object 38. The powder bed is not subject to defect detection and has no defect. On the other hand, in a case where a plurality of layers have unevenness observed as black spots, the defect candidates are integrated by the defect determination processing described with reference to FIG. 12, and the integrated defect candidates are determined as the defects or called the defects A and B.

FIG. 19 is a view illustrating a display example of the two-dimensional defect display screen 100 displayed on the display unit 90.

The two-dimensional defect display screen 100 displays an image obtained by visualizing the defects A and B and the defect candidate into 2D images by the display control unit 74 in step S55 of FIG. 17 in a superimposed manner on the BSE image (see FIG. 18) of the manufactured surface of the manufactured object 38. The two-dimensional defect display screen 100 includes the BSE image display section 101, a selected layer display section 102, the first stacking number designation section 103, and an enlargement/reduction section 104.

The BSE image display section 101 is an example of the first defect display section in which the layer of the manufactured object 38 and the first defect (defect A) and the second defect (defect B), which are subjected to the highlighting processing, are displayed as the two-dimensional images. The manufactured surface of the manufactured object 38 and the powder bed are displayed on the BSE image display section 101. Rectangular frames are displayed so as to be superimposed respectively on the defects A and B and the defect candidate on the manufactured surface. Each rectangular frame is displayed in a color assigned by the display control unit 74. For example, a rectangular frame 105 represents the defect A and is displayed in the first color (red). A rectangular frame 106 represents the defect B and is displayed in the second color (yellow). A rectangular frame 107 represents a region of the defect candidate other than the defects A and B, and is displayed in the third color (blue). As described above, the positions of the defects A and B and the defect candidate are highlighted by the rectangular frames, and the rectangular frames are displayed with color-coding, so that the user can identify at a glance where the defect is present in the manufactured object and whether or not the size of the defect is within an allowable range by the color in which the rectangular frame is displayed.

Here, the BSE image illustrated in FIG. 18 is captured after a certain layer (for example, the N+5-th layer) of the manufactured object 38 is melted. In the BSE image display section 101 of FIG. 19, an example in which color-coding using three colors is made for the original image is illustrated, but such color-coding does not indicate the defect information of only the N+5-th layer. That is, such color-coding reflects defect determination results of the plurality of layers by the processing of steps S1 to S6 of the defect detection processing illustrated in FIG. 4. For example, it is assumed that integrated defect candidates with the defect candidate ID2 and the defect candidate ID4 illustrated in FIG. 15 have been determined as defects in step S28 through step S27 in FIG. 12. On the other hand, it is assumed that the integrated defect candidates with the defect candidate ID1 and the defect candidate ID3 have not been determined as defects since negative determination (NO) has been made in step S27 of FIG. 12.

Then, it is assumed that the defect candidate with the defect candidate ID2, which has been determined as a defect, has been determined as the defect A in step S30 through step S29. In addition, it is assumed that the defect candidate with the defect candidate ID4, which has been determined as a defect, has been determined as the defect B in step S31 through step S29. In this case, the defect A displayed in the first color (red) on the BSE image display section 101 in FIG. 19 includes the defect candidate with the defect candidate ID2, and the defect B displayed in the second color (yellow) includes the defect candidate with the defect candidate ID4.

The selected layer display section 102 displays the stacking number (layer number) in the manufactured object 38, which is displayed on the BSE image display section 101. In FIG. 19, "205/220" is displayed on the selected layer display section 102. The number indicates that the manufactured surface of the 205-th layer among 220 layers manufactured by the PBF-AM is being displayed on the BSE image display section 101.

The first stacking number designation section 103 with which the user designates the stacking number of the layer by the input unit 60 is positioned on the right side of the two-dimensional defect display screen 100 of FIG. 19. The first stacking number designation section 103 is used by the user to select a layer of the manufactured object 38 to be displayed on the BSE image display section 101. The display control unit 74 includes, in the two-dimensional defect display screen 100, the first defect (defect A) and the second defect (defect B) in the layer corresponding to the stacking number designated by the first stacking number designation section 103.

As illustrated in FIG. 19, the first stacking number designation section 103 includes a scroll bar displayed at an end of the two-dimensional defect display screen. When a knob of the scroll bar is moved in a first direction (for example, upward) by the input unit 60, the display control unit 74 increases the stacking number of the layer to be displayed on the BSE image display section 101. On the other hand, when the knob is moved in a second direction (for example, downward), the display control unit 74 decreases the stacking number of the layer to be displayed on the BSE image display section 101. The user can change the layer of the manufactured surface of the manufactured object 38 to be displayed on the BSE image display section 101 by moving the knob of the scroll bar upward and downward.

The enlargement/reduction section 104 is used by the user to enable or disable an enlargement/reduction function for the BSE image displayed on the BSE image display section 101. When the enlargement/reduction section 104 is unchecked, it is possible to perform an operation of enlarging or reducing the BSE image. Therefore, for example, the manufactured surface displayed on the BSE image display section 101 is enlarged or reduced by a wheel operation of the mouse. In addition, when the user drags the BSE image, the BSE image can be moved to a location where the user wants to view. When the user checks the enlargement/reduction section 104, an enlargement or reduction operation is disabled, and the BSE image is displayed at a default scale such that the entire manufactured surface is displayed on the BSE image display section 101. In addition, a position where the BSE image is displayed returns to a default center position.

In addition, a scale bar S may be prepared in the BSE image display section 101, and the user may move the scale bar S such that the BSE image can be enlarged or reduced. The scale bar S also allows the user to know the size of the defect.

The colors used for the color-coding according to types such as the defect candidate and the defect displayed on the BSE image display section 101 are not necessarily limited to the above colors, and may be freely determined by the user. In addition, here, the display control unit 74 color-codes all pieces of information related to the defect. However, the display control unit 74 does not have to color-code all the pieces of information if the information is unnecessary, and may perform the color-coding in a limited manner. For example, the display control unit 74 may perform the color-coding only for the defect A and the defect B, and may display the defect candidate so as not to be highlighted by the color-coding.

The description returns to FIG. 4.

After the processing of step S7 of FIG. 4 or after negative determination (NO) is made in step S6, the manufacturing control unit 71 determines whether or not the PBF-AM of the final layer has been completed (S8). In a case where it is determined that the PBF-AM of the final layer has not been completed (NO in S8), the manufacturing control unit 71 returns to step S1, counts up m of the m-th layer, and continues the PBF-AM of the next and subsequent layers, the defect candidate specifying processing, the defect determination processing, and the display control processing. In the defect determination processing, processing of integrating the defect candidates by using the layer data subjected to the PBF-AM processing until counting up of m of the m-th layer, and determining the defect is repeatedly performed until the PBF-AM of the final layer is completed.

On the other hand, in a case where it is determined that the PBF-AM of the final layer has been completed (YES in S8), the manufacturing control unit 71 ends the defect detection processing illustrated in FIG. 4.

The defect detection method according to the first embodiment described above is referred to as "detection method 1". Note that the parameters $\alpha$, $\beta$, $\gamma$, and $\delta$ described above may be changed for each PBF-AM or may be fixed after determination. In addition, a value of the parameter may be changed for each type of powder used in the PBF-AM processing.

In the defect detection method according to the first embodiment, in a case where the larger one of the maximum length Lz and the maximum length Lxy of the integrated defect candidate is larger than the maximum length threshold $\delta$, the integrated defect candidate is determined to be a defect. Further, the defect is determined as the defect A in a case where the maximum length is larger than the maximum allowable length $\omega$, and the defect is determined as the defect B in a case where the maximum length is equal to or smaller than the maximum allowable length $\omega$. Thereafter, the manufactured surface of the manufactured object 38 in which the color-coding is performed for each of the defects A and B and the defect candidate is displayed for each layer. Therefore, even during the PBF-AM processing of the manufactured object 38, the user can confirm the positions of the defects A and B and the defect candidate occurring on the manufactured surface as the defect information for each layer in real time during the PBF-AM. Here, since the defects A and B are displayed on the display unit 90, the user can confirm the presence or absence of the defects determined as the defects A and B on the manufactured surface and the positions of the defects A and B. Since the user can obtain, during the PBF-AM, the defect information that was able to be obtained only after the PBF-AM according to the related art, a manufacturing period and a quality evaluation period of the manufactured object 38 can be significantly shortened. Furthermore, there is an effect of greatly reducing work related to quality evaluation for the manufactured object 38 by the user.

Furthermore, since a defect formed to be long in the stacking direction is highly likely to remain in the manufactured object 38 after the completion of manufacturing, a measure such as stopping the PBF-AM processing of the manufactured object 38 in which the defect has been detected can be taken even during the PBF-AM. By taking such a measure, it is possible to prevent unnecessary consumption of materials and power due to the PBF-AM processing.

According to the related art, only XY cross-section data of a layer subjected to defect detection has been used for the layer subjected to defect detection. Therefore, in the defect detection method according to the related art, it is erroneously detected that the defect remains in the manufactured object 38 even when the defect detected in a certain layer has disappeared as the PBF-AM processing proceeds. On the other hand, in the present embodiment, in addition to XY cross-section data of a layer subjected to defect detection, XY cross-section data of a layer stacked after the layer subjected to defect detection is also used for the defect detection. Therefore, a defect candidate that has disappeared after a plurality of layers are stacked is not erroneously detected as a defect. As a result, accuracy in detection of a defect remaining in the manufactured object 38 can be increased.

Further, since the defect information determined during the PBF-AM is displayed on the display unit 90, the user can confirm the status of the defect, the shape of the defect candidate of the defect, and the like. Therefore, the user can re-perform the PBF-AM processing, reset various parameters, and the like at an early stage when the defect is determined, and thus can obtain the intended manufactured object 38.

In the defect detection method (detection method 1) according to the first embodiment, an example in which the display control processing in step S7 of FIG. 4 is performed by online real-time processing has been described, but the display control processing may be performed after the manufacturing processing. In this case, the display control processing in step S7 is performed independently according to an input operation performed by the user. Furthermore, the display control processing may be performed by an external server (such as a cloud server) different from the three-dimensional PBF-AM apparatus 1. In this case, a user in a base different from a facility in which the three-dimensional PBF-AM apparatus 1 is installed can confirm a result of the PBF-AM processing.

The defect candidate indicated by the defect candidate ID2 in FIG. 15 has a shape in which the defect candidates are connected at substantially the same positions in multiple layers. The defect candidate is not limited to such a shape, and may branch partway. In addition, two defect candidates specified in a certain layer may be connected in a layer stacked next. Even such defect candidates having various shapes can be reliably detected by using the defect detection method according to the present embodiment as long as the defects affect the quality of the manufactured object 38.

[2. Second Embodiment]

Next, a defect detection method according to the second embodiment of the present invention will be described.

The defect detection method according to the second embodiment is performed using the three-dimensional PBF-AM apparatus 1 according to the first embodiment and a control unit 70 and a recording unit 80 in a PC 54. Then, the same processing is performed from step S1 of FIG. 4 to step S54 of FIG. 17 according to the first embodiment. As described above, the display control unit 74 according to the second embodiment generates the 3D image in step S56. Therefore, in the defect detection method according to the second embodiment, an image obtained by three-dimensionally reconstructing BSE image data of a BSE image is used.

FIG. 20 is a view illustrating a display example of the three-dimensional defect display screen 110 on which the manufactured object 38 is displayed in 3D. FIG. 20 illustrates an example in which the same manufactured object 38 as in FIG. 19 is displayed in 3D. However, since the drawings become complicated, the locations of the defects A and B and the numbers of defects A and B are different from those in FIG. 19. A defect candidate is not displayed.

The three-dimensional defect display screen 110 displays an image obtained by visualizing the defects A and B and the defect candidate into a 3D image by the display control unit 74 in step S55 of FIG. 17 on the BSE image (see FIG. 18) of a manufactured surface of the manufactured object 38. Therefore, the three-dimensional defect display screen 110 includes a BSE image display section 111, a color-coded display section 112, and a display part switching section 113.

The manufactured object 38, the layer, and the first defect (defect A) and the second defect (defect B), which are subjected to the highlighting processing, are displayed as three-dimensional images on the BSE image display section 111. The display control unit 74 includes, in the three-dimensional defect display screen 110, the first defect (defect A) and the second defect (defect B) in the layer corresponding to the stacking number designated by the second stacking number designation section 114. Rectangular frames are displayed so as to be superimposed respectively on the defects A and B and the defect candidate on the manufactured surface of the manufactured object 38. Each rectangular frame is displayed in a color assigned by the display control unit 74. For example, a rectangular frame 115 represents the defect A and is displayed in a first color (red). A rectangular frame 116 represents the defect B and is displayed in a second color (yellow). Although not illustrated, a rectangular frame representing a region of the defect candidate other than the defects A and B and displayed in a third color (blue) can also be displayed. As described above, the positions of the defects A and B and the defect candidate are highlighted by the rectangular frames, and the rectangular frames are displayed with color-coding, so that the user can three-dimensionally identify at a glance where the defect is present in the manufactured object and whether or not the size of the defect is within an allowable range by the color in which the rectangular frame is displayed.

The color-coded display section 112 prepares an enable or disable check and can switch whether or not to perform color-coded display. When the user checks the color-coded display section 112 to enable the color-coded display, the defect of the manufactured object 38 is displayed in 3D with color-coding. When the user unchecks the color-coded display section 112 to disable the color-coded display, the defect of the manufactured object 38 is displayed in 3D without color-coding. Note that, when the user unchecks the color-coded display section 112 to disable the color-coded display, the defects A and B and the defect candidate of the manufactured object 38 may be displayed as hatched monochrome images instead of being displayed with color-coding.

The display part switching section 113 can input an instruction for displaying, in 3D, the BSE image of one manufactured object 38 among a plurality of manufactured objects 38 to be manufactured by the PBF-AM at one time. The display part switching section 113 displays a part name for specifying the manufactured object 38, and the user can select the manufactured object 38 to be displayed in 3D by selecting the part name. When the identification information (for example, a manufactured object name) of the manufactured object 38 is instructed by the input unit 60, the display control unit 74 acquires the layer data associated with the instructed identification information, and generates the BSE image display section 111 and the three-dimensional defect display screen 110 again as the visualized image based on the layer data. Therefore, the user can switch the manufactured object 38 to be displayed on the three-dimensional defect display screen 110 through the display part switching section 113.

A prismatic manufactured object 38 is displayed on the three-dimensional defect display screen 110 illustrated in FIG. 20. Here, the second stacking number designation section 114 that traverses the manufactured object 38 in the horizontal direction is represented as a transverse image that traverses the manufactured object 38 displayed on the BSE image display section 111 in the horizontal direction (x and y directions) at a position corresponding to the stacking number designated by the second stacking number designation section 114. The user can drag the second stacking number designation section 114 with the mouse to move the second stacking number designation section 114 upward and downward. When the transverse image is moved in a first direction (for example, upward) by the input unit 60 operated by the user, the stacking number of the layer to be displayed on the BSE image display section 111 is increased. On the other hand, when the second stacking number designation section 114 is moved in a second direction (for example, downward), the display control unit 74 decreases the stacking number of the layer to be displayed on the BSE image display section 111.

Note that the display control unit 74 can also perform control to display the three-dimensional defect display screen 110 illustrated in FIG. 20 on a display unit 90 in conjunction with a two-dimensional defect display screen 100 illustrated in FIG. 19. In this case, the display control unit 74 edits a first parallel display screen (not illustrated) including the two-dimensional defect display screen 100 and the three-dimensional defect display screen 110 as the visualized image. The two-dimensional defect display screen 100 and the three-dimensional defect display screen 110 are displayed side by side on the display unit 90. When the user moves the second stacking number designation section 114, the BSE image at a height of the second stacking number designation section 114 is displayed on the two-dimensional defect display screen 100 illustrated in FIG. 19 in conjunction with such movement.

As described with reference to FIG. 19, a selected layer display section 102 on the upper-right side of the two-dimensional defect display screen 100 indicates the stacking number (layer number) of the layer of the manufactured object 38 displayed on the BSE image display section 101. Therefore, the user can grasp a position of the defect in the Z direction by viewing the selected layer display section 102. In a case where the user desires to confirm the exact position of the defect, the user can drag the second stacking number designation section 114 upward and downward, and confirm the two-dimensional defect display screen 100 of FIG. 19 that displays the BSE image at the corresponding height in conjunction with the dragging to confirm the stacking number of the layer in which the defect is detected and a position of an xy cross section of the defect in the layer. Further, a first stacking number designation section 103 with which the user designates the stacking number of the layer by the input unit 60 is positioned on the right side of the two-dimensional defect display screen 100 of FIG. 19. Therefore, the user can also designate the stacking number of the layer for which the user desires to confirm a defect by moving a scroll bar of the first stacking number designation section 103 upward and downward. In addition, the second stacking number designation section 114 illustrated in the three-dimensional defect display screen 110 of FIG. 20 is also moved upward and downward in conjunction with the operation of moving the scroll bar of the first stacking number designation section 103 upward and downward by the user.

As described above, the three-dimensional defect display screen 110 according to the second embodiment is displayed in conjunction with the two-dimensional defect display screen 100 illustrated in FIG. 19, so that the user can strictly confirm the position of the defect detected in the manufactured object 38.

The colors used for the color-coding according to types such as the defect candidate and the defect displayed on the BSE image display section 111 are not necessarily limited to the above colors, and may be freely determined by the user. In addition, although the display control unit 74 does not highlight the defect candidate by color-coding on the three-dimensional defect display screen 110 illustrated in FIG. 20, the defect candidate may be displayed with color-coding. Conversely, the display control unit 74 does not have to color-code all pieces of information if the information is unnecessary, and may perform the color-coding in a limited manner. For example, the color-coding may be performed only for the defect A and the defect B, and the defect candidate does not have to be highlighted by the color-coding.

In addition, a scale bar S may be prepared in the BSE image display section 111, and the user may move the scale bar S such that the 3D image of the manufactured object 38 can be enlarged or reduced. The scale bar S also allows the user to know the size of the defect. In addition, the user may rotate a wheel of a mouse used for the input unit 60 such that the 3D image of the manufactured object 38 can be enlarged and reduced. Furthermore, the user may operate the mouse to freely rotate the 3D image of the manufactured object 38 in a left direction, a right direction, an upward direction, a downward direction, and an oblique direction.

Further, in the defect detection method according to the second embodiment, an example in which display control processing in step S7 of FIG. 4 is performed by online real-time processing has been described, but the display control processing may be performed after manufacturing processing.

[3. Third Embodiment]

Next, a defect detection method according to the third embodiment of the present invention will be described.

The defect detection method according to the third embodiment is performed using the three-dimensional PBF-AM apparatus 1 according to the first embodiment and a control unit 70 and a recording unit 80 in a PC 54. Then, the same processing is performed from step S1 of FIG. 4 to step S54 of FIG. 17 according to the first embodiment. As described above, the display control unit 74 according to the third embodiment generates the result table in step S57.

FIG. 21 is a diagram illustrating a display example of a result table display screen 120 on which the result table is displayed.

The result table generated in step S57 in FIG. 17 by the display control unit 74 is displayed on the result table display screen 120. The result table includes fields including a manufactured object name (part name), a manufactured object volume [mm$^3$], a volumetric defect ratio [%], the number of defects, a maximum defect length [$\mu$m], and a determination result.

The manufactured object name is an identification name assigned to each manufactured object 38.

The manufactured object volume represents a volume of the manufactured object 38 at a time point when PBF-AM assumed in manufacturing data is completed.

The volumetric defect ratio represents a ratio of the volume of a defect detected in the manufactured object 38 to the volume of the entire manufactured object 38 at the time point when the PBF-AM assumed in the manufacturing data is completed.

The number of defects represents the number of defects detected in the manufactured object 38.

The maximum defect length represents a maximum length of the defect detected in the manufactured object 38. The left side separated by an at mark represents the maximum length of the defect, and the right side represents a stacking number (layer number) of a layer in which the defect has occurred. Note that even if the current number of stacked layers in the PBF-AM is, for example, 1300, the stacking number (1206 layer) for which the maximum length has been determined is displayed on the result table display screen 120.

The determination result represents a result of the PBF-AM processing of the manufactured object 38. For example, it is usually desirable that the volumetric defect ratio is less than 0.1%, but for example, in a case where the volumetric defect ratio exceeds 1%, BAD is displayed in the field of the determination result.

In the result table, in a case where an abnormal value is included in important information (the number of defects, the maximum defect length, or the like) regarding the defect for each manufactured object, or in a case where a fatal defect has occurred in the PBF-AM performed until the user confirms the result table, BAD is displayed in the field of the determination result. The PBF-AM processing of the manufactured object 38 in which the fatal defect has occurred needs to be stopped, or the manufactured object 38 in which the fatal defect has occurred needs to be discarded and then re-created. Therefore, only information regarding the manufactured object 38 for which BAD is displayed in the field of the determination result may be displayed on the result table display screen 120.

On the other hand, in a case where the PBF-AM is progressing without any problem, GOOD is displayed in the field of the determination result. In order to make it easy for the user to visually recognize that BAD is displayed, the display control unit 74 may generate a screen in which a character color of BAD is red or a cell including BAD is displayed in red. In this way, by displaying GOOD or BAD in the field of the determination result, the user can confirm whether or not there is a quality problem caused by a defect for the manufactured object 38 for which the PBF-AM processing is currently in progress in real time during the PBF-AM.

Five fields including the manufactured object volume, the volumetric defect ratio, the number of defects, the maximum defect length, and the result are displayed as graphical user interfaces (GUIs) on the result table display screen 120.

However, the fields displayed on the result table display screen 120 are not necessarily limited to such five fields, and other fields may be added. Conversely, fields considered to be unnecessary may be deleted. In addition, the character color of BAD displayed in the field of the determination result does not have to be different and may be the same as the character color of GOOD.

[4. Fourth Embodiment]

Next, a defect detection method according to the fourth embodiment of the present invention will be described.

The defect detection method according to the fourth embodiment is performed using the three-dimensional PBF-AM apparatus 1 according to the first embodiment and a control unit 70 and a recording unit 80 in a PC 54. Then, the same processing is performed from step S1 of FIG. 4 to step S54 of FIG. 17 according to the first embodiment. As described above, the display control unit 74 according to the fourth embodiment generates the histogram and the graph in step S58.

FIG. 22 is a histogram representing the relationship between the defect length and the number of defects of each of two manufactured objects 38.

Such a histogram has a horizontal axis representing the defect length and a vertical axis representing the number of defects, and is displayed on a histogram display screen 130.

The names of the two manufactured objects 38 are Part A and Part B. With such a histogram, the user can recognize the number of defects corresponding to each defect length at a glance. For example, the histogram indicates that in a case where the defect length is smaller than 15.0 mm, the number of defects in Part A is larger than the number of defects in Part B, and in a case where the defect length is smaller than 20.0 mm, the number of defects in Part B is larger than the number of defects in Part A. It can be seen from the histogram that there is no defect having a defect length of smaller than 5.0 mm, and there is no defect having a defect length of larger than 20.0 mm and smaller than 25.0 mm.

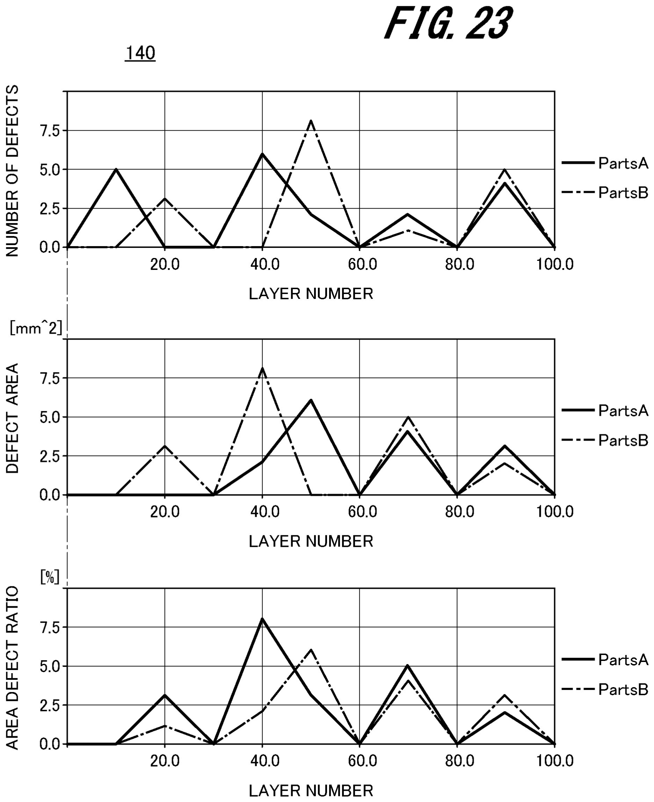

FIG. 23 illustrates line graphs representing a relationship among the number of defects, the defect area, and the area defect ratio of two manufactured objects 38. The graph has a horizontal axis representing a stacking height indicated by a layer number, and a vertical axis representing the number of defects, the defect area, and the area defect ratio. The graph is displayed on a graph display screen 140.

With the graph of the number of defects, the user can recognize the number of defects corresponding to each stacking height at a glance.

With the graph of the defect area, the user can recognize the volume of the defect corresponding to each stacking height at a glance.

With the graph of the area defect ratio, the user can recognize the area defect ratio corresponding to each stacking height at a glance.

Also in the graphs, the names of the two manufactured objects 38 are Part A and Part B, and the number of defects, the defect area, and the area defect ratio of each manufactured object 38 are shown. In FIG. 23, information regarding Part A is indicated by a solid line, and information regarding Part B is indicated by a line with alternating long and short dashes. With the graphs, the user can confirm the layer numbers (stacking number) with a large number of defects, a large defect area, a high area defect ratio of Part A and Part B.

In this way, by displaying the histogram and the graph, the user can confirm whether or not there is a quality problem caused by a defect for the manufactured object 38 for which the PBF-AM processing is currently in progress in real time.

In the histogram display screen 130 and the graph display screen 140, four fields including the number of defects, the defect length, the defect area, and the area defect ratio are displayed as GUIs as important information regarding the defect. However, the fields of the histogram and the graph displayed on the histogram display screen 130 and the graph display screen 140 are not limited to such four fields, and other fields may be added. Conversely, fields considered to be unnecessary may be deleted. Instead of the area defect ratio, a volumetric defect ratio illustrated in FIG. 21 may be displayed as the histogram and the graph.

Further, in the defect detection method according to the fourth embodiment, an example in which display control processing in step S7 of FIG. 4 is performed by online real-time processing has been described, but the display control processing may be performed after manufacturing processing.

Here, the histogram (bar graph) is displayed on the histogram display screen 130 illustrated in FIG. 22 and the line graphs are displayed on the graph display screen 140 illustrated in FIG. 23. However, there is no need to limit a display form to such types of graphs. For example, a display form switching button for switching a graph display form is prepared on the histogram display screen 130 and the graph display screen 140. Then, switching between bar graph display and line graph display may be made when the user presses the display form switching button.

Further, a case where the number of manufactured objects 38 is large is also assumed. In this case, a manufactured object selection button is prepared on the histogram display screen 130 and the graph display screen 140. Then, the displayed manufactured object 38 may be switched when the user presses the manufactured object selection button. In addition, the legend displayed in the graph may be freely determined, and the legend may be limited.

[5. Fifth Embodiment]

Next, a defect detection method according to a fifth embodiment of the present invention will be described.

The defect detection method according to the fifth embodiment is performed using the three-dimensional PBF-AM apparatus 1 according to the first embodiment and a control unit 70 and a recording unit 80 in a PC 54. Then, in the defect detection method according to the fifth embodiment, the same processing is performed from step S1 of FIG. 4 to step S26 of FIG. 12 according to the first embodiment.

In the fifth embodiment, maximum length thresholds $\delta z$ and $\delta xy$ used by a defect detection unit 73 to determine a defect are recorded in a parameter recording unit 81. Then, in a case where a maximum length is a stacking direction length Lz, and the stacking direction length Lz exceeds the maximum length threshold $\delta z$ in a stacking direction, or in a case where the maximum length is a maximum layer length Lxy, and the maximum layer length Lxy exceeds the maximum layer length threshold $\delta xy$ in the layer, the defect detection unit 73 detects an integrated defect candidate as the defect.

For example, in step S27 (see FIG. 12) of the defect detection method according to the fifth embodiment, in a case where the maximum length is Lz, the defect detection unit 73 compares the maximum length Lz with the threshold $\delta z$. In a case where it is determined that the maximum length Lz is larger than the threshold $\delta z$, the defect detection unit 73 proceeds to step S28 and determines the integrated defect candidate as the defect.

On the other hand, in a case where the maximum length is Lxy (Lx max or Ly max), the defect detection unit 73 compares the maximum length Lxy with the maximum layer length threshold $\delta xy$. In a case where it is determined that the maximum length Lxy is larger than the maximum layer length threshold $\delta xy$, the defect detection unit 73 proceeds to step S28 and determines the integrated defect candidate as the defect.

Thereafter, the defect detection unit 73 determines whether or not the maximum length of the integrated defect candidate determined as the defect in step S28 exceeds a maximum allowable length $\omega$ (S29). In a case where the maximum length exceeds the maximum allowable length $\omega$ (YES in S29), the defect detection unit 73 determines that the determined defect is a defect A (S30). On the other hand, in a case where the maximum length does not exceed the maximum allowable length $\omega$ (NO in S29), the defect detection unit 73 determines that the determined defect is a defect B (S31). The subsequent display control of the defects A and B and the defect candidate is similar to the processing performed by a display control unit 74 according to the first to fourth embodiments.

The defect detection method according to the fifth embodiment described above is referred to as "detection method 2".

In the first embodiment, the thresholds are unified to $\delta$ regardless of the X, Y, and Z directions for the maximum length. However, there is a high possibility that how a powder material is melted varies between the X and Y directions and the Z direction. For example, how the powder is melted in the X direction and the Y direction varies depending on an intensity of an electron beam, a scanning motion in the X direction and the Y direction, and the like. On the other hand, how the powder is melted in the Z direction varies depending on a depth of the electron beam in the stacking direction. Therefore, using the detection method 2, the defect detection unit 73 according to the fifth embodiment changes the threshold to be compared in two patterns for a case where the maximum length is in the X direction or the Y direction and a case where the maximum length is in the Z direction, and compares the maximum length in the X direction or the Y direction and the maximum length in the Z direction with each threshold. Therefore, a defect candidate that can vary depending on how the powder material is melted in the X direction, the Y direction, and the Z direction can be appropriately determined as the defect. The subsequent processing in the defect detection unit 73 and the display control unit 74 according to the fifth embodiment is similar to the processing in the defect detection unit 73 and the display control unit 74 according to the first to fourth embodiments. Therefore, the user can confirm defect information by viewing various screens displayed on a display unit 90.

Note that the parameters $\alpha$, $\beta$, $\gamma$, $\delta z$, and $\delta xy$ described above may be changed for each PBF-AM or may be fixed after determination. In addition, a value of the parameter may be changed for each type of powder used. In addition, a value of the parameter may be changed for each type of powder used in the PBF-AM processing.

Although various parameters are used in each of the above-described embodiments, such parameters may be changed depending on the layer. For example, in the first embodiment, four types of parameters $\alpha$, $\beta$, $\gamma$, and $\delta$ have been described. Among the four types of parameters, for example, the maximum length threshold $\delta$ can be set such that $\delta = 5$ for up to 100 to 200 layers, and $\delta = 10$ for up to 201 to 300 layers. There is a possibility that appropriate values of the parameters vary depending on a shape of a manufactured object 38. In such a case, it is expected that defect detection accuracy is further improved by changing the parameters depending on the layer.

[6. Sixth Embodiment]

Next, a defect detection method according to a sixth embodiment of the present invention will be described.

The defect detection method according to the sixth embodiment is performed using the three-dimensional PBF-AM apparatus 1 according to the first embodiment and a control unit 70 and a recording unit 80 in a PC 54. Then, in the defect detection method according to the sixth embodiment, the same processing is performed from step S1 of FIG. 4 to step S25 of FIG. 12 according to the first embodiment. Integrated defect candidates are illustrated in FIG. 15.

In the sixth embodiment, a defect detection unit 73 prepares a stacking direction length threshold Lz_lim and a maximum layer length threshold Lxy_lim used by the defect detection unit 73 to determine a defect. Such thresholds are recorded in a parameter recording unit 81. The defect detection unit 73 detects the integrated defect candidate as a defect in a case where a stacking direction length Lz is equal to or larger than the stacking direction length threshold Lz_lim and a maximum layer length Lxy is equal to or larger than the maximum layer length threshold Lxy_lim. The integrated defect candidates are illustrated in FIG. 15.

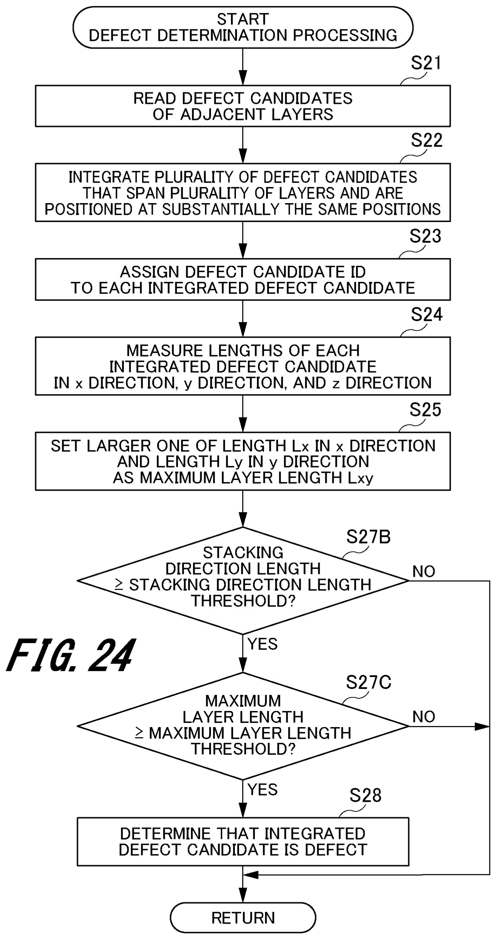

FIG. 24 is a flowchart illustrating an example of defect determination processing according to the sixth embodiment.

As described above, steps S21 to S25 in FIG. 24 are the same steps of processing as steps S21 to S25 in FIG. 12, and thus a detailed description thereof will be omitted. Step S26 in FIG. 12 is deleted.

After step S25, the defect detection unit 73 determines whether the length of the integrated defect candidate in the Z direction (referred to as the stacking direction length Lz), which is measured in step S24, is equal to or larger than the stacking direction length threshold Lz_lim read from the parameter recording unit 81 (S27B).

In a case where it is determined that the stacking direction length Lz is equal to or larger than the stacking direction length threshold Lz_lim (YES in S27B), the defect detection unit 73 determines whether or not the maximum layer length Lxy of the integrated defect candidate, which is calculated in step S25, is equal to or larger than the maximum layer length threshold Lxy_lim (S27C).

In a case where it is determined that the maximum layer length Lxy is equal to or larger than the maximum layer length threshold Lxy_lim (YES in S27C), the defect detection unit 73 determines that the integrated defect candidate is a defect (S28) and advances the processing to step S6 in FIG. 4.

On the other hand, in a case where it is determined that the stacking direction length Lz is not equal to or larger than the stacking direction length threshold Lz_lim (NO in S27B) or it is determined that the maximum layer length Lxy is not equal to or larger than the maximum layer length threshold Lxy_lim (NO in S27C), the defect detection unit 73 does not determine that the integrated defect candidate is a defect, and advances the processing to step S6 in FIG. 4.

The defect detection method according to the sixth embodiment described above is referred to as "detection method 3". The detection method 3 is substantially the same as the detection method 1 according to the first embodiment. However, the difference is that the defect detection unit 73 detects the integrated defect candidate as a defect in a case where the stacking direction length Lz is equal to or larger than the stacking direction length threshold Lz_lim and the maximum layer length Lxy is equal to or larger than the maximum layer length threshold Lxy_lim.

Note that the stacking direction length threshold Lz_lim and the maximum layer length threshold Lxy_lim described above may be changed for each PBF-AM, or may be fixed once determined. In addition, a value of the parameter may be changed for each type of powder used in the PBF-AM processing.

Also in the detection method 3 according to the sixth embodiment described above, after the detection of the defect, defects A and B can be determined by combining the processing of steps S29 to S31 in FIG. 12, and the defects A and B can be displayed as GUIs on a display unit 90 in the first to fourth embodiments. Therefore, display control of the defects A and B and the defect candidate is similar to the processing performed by a display control unit 74 according to the first to fourth embodiments.

[7. Seventh Embodiment]

Next, a defect detection method according to a seventh embodiment of the present invention will be described.

The defect detection method according to the seventh embodiment is performed using the three-dimensional PBF-AM apparatus 1 according to the first embodiment and a control unit 70 and a recording unit 80 in a PC 54. Then, in the defect detection method according to the seventh embodiment, the same processing is performed from step S1 of FIG. 4 to step S25 of FIG. 12 according to the first embodiment.

In the seventh embodiment, a defect detection unit 73 prepares a stacking direction length threshold Lz_lim and a maximum layer length threshold Lxy_lim used by the defect detection unit 73 to determine a defect. Such thresholds are recorded in a parameter recording unit 81. The defect detection unit 73 detects the integrated defect candidate as a defect in a case where a stacking direction length Lz is equal to or larger than the stacking direction length threshold Lz_lim or a maximum layer length Lxy is equal to or larger than the maximum layer length threshold Lxy_lim. The integrated defect candidates are illustrated in FIG. 15.

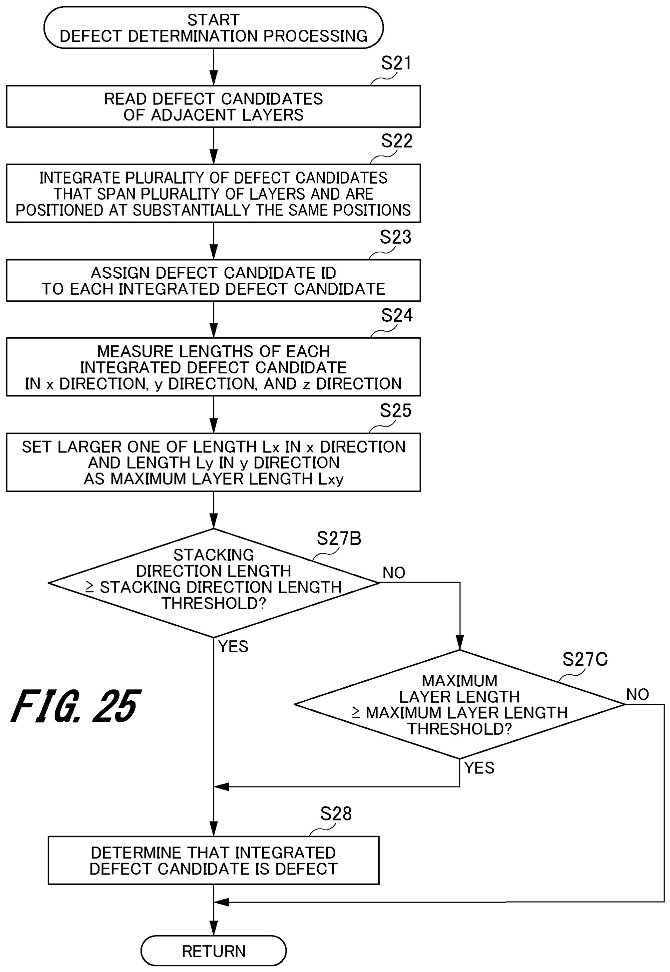

FIG. 25 is a flowchart illustrating an example of defect determination processing according to the seventh embodiment.

As described above, steps S21 to S25 in FIG. 25 are the same steps of processing as steps S21 to S25 in FIG. 12, and thus a detailed description thereof will be omitted. Step S26 in FIG. 12 is deleted.

After step S25, the defect detection unit 73 determines whether the length of the integrated defect candidate in the Z direction (referred to as the stacking direction length Lz), which is measured in step S24, is equal to or larger than the stacking direction length threshold Lz_lim read from the parameter recording unit 81 (S27B).

In a case where it is determined that the stacking direction length Lz is equal to or larger than the stacking direction length threshold Lz_lim (YES in S27B), the defect detection unit 73 determines that the integrated defect candidate is a defect (S28) and advances the processing to step S6 in FIG. 4.

On the other hand, in a case where it is determined that the stacking direction length Lz is not equal to or larger than the stacking direction length threshold Lz_lim (NO in S27B), the defect detection unit 73 determines whether or not the maximum layer length Lxy of the integrated defect candidate, which is calculated in step S25, is equal to or larger than the maximum layer length threshold Lxy_lim (S27C).

In a case where it is determined that the maximum layer length Lxy is equal to or larger than the maximum layer length threshold Lxy_lim (YES in S27C), the defect detection unit 73 determines that the integrated defect candidate is a defect (S28) and advances the processing to step S6 in FIG. 4.

On the other hand, in a case where it is determined that the maximum layer length Lxy is not equal to or larger than the maximum layer length threshold Lxy_lim (NO in S27C), the defect detection unit 73 does not determine that the integrated defect candidate is a defect (S28) and advances the processing to step S6 in FIG. 4.

The defect detection method according to the seventh embodiment described above is referred to as "detection method 4". The detection method 4 is substantially the same as the detection method 1 according to the first embodiment. However, the difference is that the defect detection unit 73 detects the integrated defect candidate as a defect in a case where the stacking direction length Lz is equal to or larger than the stacking direction length threshold Lz_lim or the maximum layer length Lxy is equal to or larger than the maximum layer length threshold Lxy_lim.

Note that the stacking direction length threshold Lz_lim and the maximum layer length threshold Lxy_lim described above may be changed for each PBF-AM, or may be fixed once determined. In addition, a value of the parameter may be changed for each type of powder used in the PBF-AM processing.

Also in the detection method 4 according to the seventh embodiment described above, after the detection of the defect, defects A and B can be determined by combining the processing of steps S29 to S31 in FIG. 12, and the defects A and B can be displayed as GUIs on a display unit 90 in the first to fourth embodiments. Therefore, display control of the defects A and B and the defect candidate is similar to the processing performed by a display control unit 74 according to the first to fourth embodiments.

[8. Modified Example]

Note that the information displayed as the GUI on the display unit 90 described in each of the above-described embodiments may be collectively output as a report screen 150 after completion of the PBF-AM processing.

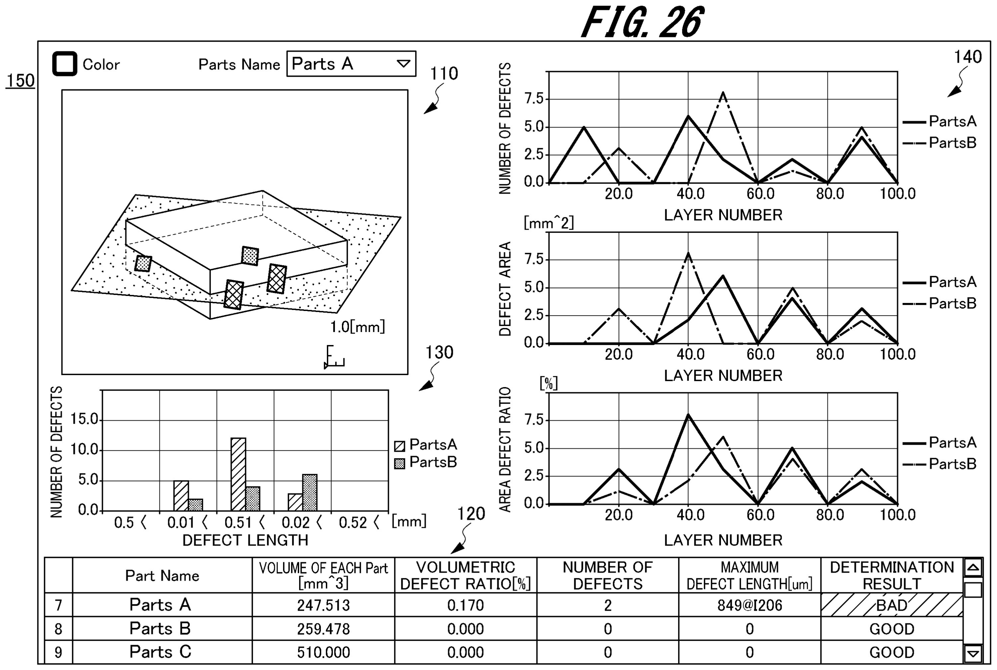

FIG. 26 is a view illustrating a display example of the report screen 150 according to a modified example of the first to seventh embodiments.

On the report screen 150, the display control unit 74 edits the report screen 150 (an example of a second parallel display screen) including the three-dimensional defect display screen 110 illustrated in FIG. 20, the result table display screen 120 illustrated in FIG. 21, the histogram display screen 130 illustrated in FIG. 22, and the graph display screen 140 illustrated in FIG. 23 into the visualized image. Note that the report screen 150 may include the two-dimensional defect display screen 100 illustrated in FIG. 19 instead of the three-dimensional defect display screen 110 illustrated in FIG. 20, or may include both the two-dimensional defect display screen 100 and the three-dimensional defect display screen 110. Therefore, at least one of the two-dimensional defect display screen 100 and the three-dimensional defect display screen 110 is included in the report screen 150.

The user can confirm various types of information on the report screen 150 without a screen switching operation. However, a format of the report screen 150 is not limited thereto, and the user may freely designate only a table or only a graph.

In addition, for the defect A or the defect B designated by the input operation performed by the user through the input unit 60, information regarding a layer in which the defect A or the defect B designated on each screen illustrated in FIGS. 19 to 23 and 26 has been determined may be searched and displayed. In this case, the user can promptly confirm the defect A or the defect B that the user wants to pay attention to by saving time and effort for searching the layer in which the defect A or the defect B has been determined from an enormous number of layers.

In addition, the defect detection unit 73 assigns defect identification information capable of identifying a plurality of defects A and a plurality of defects B to each of the defects A and B. For example, the defect candidate identifier may be used as the defect identification information. The display control unit 74 displays the defect identification information together with a rectangular frame on the two-dimensional defect display screen 100 of FIG. 19 and the three-dimensional defect display screen 110 of FIG. 20, for example. By displaying the defect identification information, the user can identify the defects A and B of interest even if the manufactured surface is displayed in a state of being rotated.

In each of the above-described embodiments, an example in which the present invention is applied to the manufacturing control software dedicated to manufacturing used in the powder bed type three-dimensional PBF-AM apparatus has been described. However, it is not necessary to limit the beam for manufacturing to an electron beam method, and the present invention may be applied to manufacturing control software of a manufacturing device including other methods such as a laser method.

In addition, in each of the above-described embodiments, it has been described that the specified defect candidate and the detected defect are displayed as the BSE images on the BSE monitor 55, but the defect candidate and the BSE image may be displayed as camera images captured by the camera 42.

In each of the above-described embodiments, the defect candidate is specified and the defect is detected during the PBF-AM processing, but the defect candidate may be specified and the defect may be detected after the end of the manufacturing processing. That is, the defect candidate specifying unit 72 and the defect detection unit 73 can operate either during the PBF-AM processing or after the PBF-AM processing.

Furthermore, since the defect detection accuracy is enhanced by the detection method in each of the above-described embodiments, a process of further performing X-ray inspection and CT inspection on the manufactured object 38 can be omitted.

Furthermore, in each of the above-described embodiments, the PBF-AM processing may be stopped for the manufactured object including the defect detected during the PBF-AM processing. Alternatively, if a plurality of components are collectively manufactured by the PBF-AM, the PBF-AM processing may be stopped only for a manufactured object including a defect, and the PBF-AM processing may be continued for a manufactured object including another defect.

Note that the present invention is not limited to the above-described embodiments, and it goes without saying that various other application examples and modified examples can be taken without departing from the present invention described in the claims.

For example, in the above-described embodiments, the configurations of the three-dimensional PBF-AM apparatus 1 and the manufacturing control software of the PC 54 have been described in detail and specifically in order to describe the present invention in an easy-to-understand manner, and the present invention is not necessarily limited to those including all the described configurations. In addition, a part of the configuration of a certain embodiment described herein can be replaced with the configuration of another embodiment. Moreover, the configuration of a certain embodiment can be added to the configuration of another embodiment. In addition, it is possible to add, delete, and replace other configurations for a part of the configuration of each embodiment.

In addition, the control lines and the information lines indicate those considered to be necessary for the description, and do not necessarily indicate all the control lines and the information lines on the product. In practice, it may be considered that almost all the configurations are connected to each other.

Reference Signs List

1    Three-dimensional powder bed fusion additive manufacturing (PBF-AM) apparatus

| 2 | Beam irradiation device |
|---|---|
| 15 | Electron beam |
| 18 | Build table |
| 32 | Powder material |
| 35 | pre-sintered body |
| 38 | Manufactured object |
| 42 | Camera |
| 46 | Detection unit |
| 54 | PC |
| 55 | BSE monitor |
| 60 | Input unit |
| 70 | Control unit |
| 71 | Manufacturing control unit |
| 72 | Defect candidate specifying unit |
| 73 | Defect detection unit |
| 74 | Display control unit |
| 80 | Recording unit |
| 81 | Parameter recording unit |
| 82 | Defect information recording unit |
| 90 | Display unit |

**Claims**

1. An information processing apparatus comprising:

   a defect candidate specifying unit (72) configured to detect a defective portion of a layer as a defect candidate for each layer based on layer data obtained for each layer of a manufactured object manufactured by powder bed fusion additive manufacturing, and to specify a plurality of the defect candidates positioned at substantially the same positions in a plurality of the layers adjacent to each other in a stacking direction;
   a defect detection unit (73) configured to detect a defect remaining in the manufactured object based on a size of the plurality of defect candidates positioned at the substantially same positions and specified in the plurality of layers in the stacking direction and a size of each of the plurality of defect candidates in the layer, and to determine the defect as any one of a first defect which is not allowed to remain in the manufactured object and a second defect which is allowed to remain in the manufactured object based on a maximum length of the defect; and
   a display control unit (74) configured to edit defect information including at least one of the first defect and the second defect into a visualized image and to perform control such that the visualized image is displayable on a display unit (90) during the powder bed fusion additive manufacturing.

2. The information processing apparatus according to claim 1, wherein
   the display control unit (74) generates, as the visualized image, a two-dimensional defect display screen (100) including a first defect display section (101) that displays the defect information detected in the stacking direction by the defect detection unit (73), and the first defect and the second defect, which are subjected to highlighting processing, and a first stacking number designation section (103) that designates a stacking number of the layer, based on the layer data for the layer instructed by an input unit (60), and includes, in the two-dimensional defect display screen (100), the first defect and the second defect of the layer corresponding to the stacking number designated by the first stacking number designation section (103).

3. The information processing apparatus according to claim 2, wherein

   the layer, and the first defect and the second defect, which are subjected to the highlighting processing, are displayed as two-dimensional images on the first defect display section (101),
   the first stacking number designation section (103) is a scroll bar displayed at an end of the two-dimensional defect display screen (100), and
   the display control unit (74) increases the stacking number of the layer to be displayed on the first defect display section (101) when a knob of the scroll bar is moved in a first direction by the input unit (60), and decreases the stacking number of the layer to be displayed on the first defect display section (101) when the knob is moved in a second direction.

4. The information processing apparatus according to claim 1, wherein
the display control unit (74) acquires the layer data associated with identification information of the manufactured object instructed by the input unit (60), generates, as the visualized image, a three-dimensional defect display screen (110) including a second defect display section (111) that displays the defect information detected in the stacking direction by the defect detection unit (73), the first defect and the second defect, which are subjected to highlighting processing, and a three-dimensional image of the manufactured object, and a second stacking number designation section (114) that designates a stacking number of the layer, based on the layer data for the layer instructed by the input unit (60), and includes, in the three-dimensional defect display screen (110), the first defect and the second defect of the layer corresponding to the stacking number designated by the second stacking number designation section (114).

5. The information processing apparatus according to claim 4, wherein

the manufactured object, the layer, and the first defect and the second defect, which are subjected to the highlighting processing, are displayed as three-dimensional images on the second defect display section (111), the second stacking number designation section (114) is a transverse image that traverses the manufactured object displayed on the second defect display section (111) at a position corresponding to the stacking number designated by the second stacking number designation section (114), and
the display control unit (74) increases the stacking number of the layer to be displayed on the second defect display section (111) when the transverse image is moved in a first direction by the input unit (60), and decreases the stacking number of the layer to be displayed on the second defect display section (111) when the transverse image is moved in a second direction.

6. The information processing apparatus according to claim 5, wherein
when identification information of the manufactured object is instructed by the input unit (60), the display control unit (74) acquires the layer data associated with the instructed identification information, and generates the second defect display section (111) and the three-dimensional defect display screen (110) as the visualized image again based on the layer data.

7. The information processing apparatus according to claim 1, wherein

the display control unit (74) generates a two-dimensional defect display screen (100) including a first defect display section (101) that displays the defect information detected in the stacking direction by the defect detection unit (73), and the first defect and the second defect, which are subjected to highlighting processing, a first stacking number designation section (103) that designates a stacking number of the layer, and the first defect and the second defect of the layer corresponding to the stacking number designated by the first stacking number designation section (103), based on the layer data for the layer instructed by an input unit (60),
acquires the layer data associated with identification information of the manufactured object instructed by the input unit (60), generates a three-dimensional defect display screen (110) including a second defect display section (111) that displays the defect information detected in the stacking direction by the defect detection unit (73), the first defect and the second defect, which are subjected to the highlighting processing, and a three-dimensional image of the manufactured object, and a second stacking number designation section (114) that designates a stacking number of the layer, based on the layer data for the layer instructed by the input unit (60), and generates, as the visualized image, a first parallel display screen including the two-dimensional defect display screen (100) and the three-dimensional defect display screen (110).

8. The information processing apparatus according to claim 1, wherein
the display control unit (74) generates a result table including the defect information determined for each layer and information including a progress status of powder bed fusion additive manufacturing processing of the manufactured object for each manufactured object based on the layer data, and edits the result table into the visualized image including the result table, and the information including the progress status of the powder bed fusion additive manufacturing processing includes any one of information indicating that a fatal defect has occurred in the powder bed fusion additive manufacturing processing and information indicating that the powder bed fusion additive manufacturing processing has been normally performed.

9. The information processing apparatus according to claim 1, wherein
the display control unit (74) edits a histogram representing a relationship between the maximum length determined for each layer based on the layer data and the number of defects into the visualized image including the histogram for each manufactured object.

10. The information processing apparatus according to claim 1, wherein
the display control unit (74) edits at least one graph of the number of defects, a defect area, and an area defect ratio determined for each layer based on the layer data for each manufactured object into the visualized image including the at least one graph.

11. The information processing apparatus according to claim 1, wherein

the display control unit (74) generates a two-dimensional defect display screen (100) including a first defect display section (101) that displays the defect information detected in the stacking direction by the defect detection unit (73), and the first defect and the second defect, which are subjected to highlighting processing, a first stacking number designation section (103) that designates a stacking number of the layer, and the first defect and the second defect of the layer corresponding to the stacking number designated by the first stacking number designation section (103), based on the layer data for the layer instructed by an input unit (60),
acquires the layer data associated with identification information of the manufactured object instructed by the input unit (60), generates a three-dimensional defect display screen (110) including a second defect display section (111) that displays the defect information detected in the stacking direction by the defect detection unit (73), the first defect and the second defect, which are subjected to the highlighting processing, and a three-dimensional image of the manufactured object, and a second stacking number designation section (114) that designates a stacking number of the layer, based on the layer data for the layer instructed by the input unit (60), generates a result table including the defect information determined for each layer and information including a progress status of powder bed fusion additive manufacturing processing of the manufactured object for each manufactured object based on the layer data, and
generates a second parallel display screen (150) including at least one of the two-dimensional defect display screen (100) and the three-dimensional defect display screen (110), the result table, a histogram representing a relationship between the maximum length determined for each layer based on the layer data and the number of defects, and at least one graph of the number of defects, a defect area, and an area defect ratio determined for each layer based on the layer data.

12. The information processing apparatus according to any one of claims 1 to 11, wherein
the defect detection unit (73) integrates the plurality of defect candidates positioned at the substantially same positions in the stacking direction, measures a stacking direction length (Lz) of the integrated defect candidate and a first direction length (Lx) and a second direction length (Ly) in the layer in directions intersecting the stacking direction of the integrated defect candidate for each layer, sets a largest length among the first direction length (Lx) and the second direction length (Ly) as a maximum layer length (Lxy), sets a larger one of the stacking direction length (Lz) and the maximum layer length (Lxy) as the maximum length, detects the integrated defect candidate as the defect in a case where the maximum length exceeds a maximum length threshold, determines the defect whose maximum length exceeds a maximum allowable length as the first defect, and determines the defect whose maximum length does not exceed the maximum allowable length as the second defect.

13. The information processing apparatus according to claim 12, wherein
the defect candidate specifying unit (72) measures an area of an N-th layer defect candidate specified in an N-th layer, and an area of an N+1-th layer defect candidate specified in an N+1-th layer among the plurality of defect candidates overlapping each other in a plurality of layers adjacent to each other in the stacking direction, N being an integer of 1 or more, calculates an overlapping area of an overlapping portion where the N-th layer defect candidate and the N+1-th layer defect candidate overlap each other in the stacking direction, and specifies that the N-th layer defect candidate and the N+1-th layer defect candidate are at the substantially same positions in a case where a ratio of the overlapping area to the area of the N-th layer defect candidate is equal to or exceeds a first area threshold and in a case where a ratio of the overlapping area to the area of the N+1-th layer defect candidate is equal to or exceeds a second area threshold.

14. The information processing apparatus according to claim 13, wherein
the defect detection unit (73) sets a longer one of the stacking direction length (Lz) and the maximum layer length (Lxy) as the maximum length, and detects the integrated defect candidate as the defect in a case where the maximum length is the stacking direction length (Lz) and the stacking direction length (Lz) exceeds the maximum length threshold in the stacking direction, or in a case where the maximum length is the maximum layer length (Lxy) and the maximum layer length (Lxy) exceeds a maximum layer length threshold in the layer.

**15.** The information processing apparatus according to any one of claims 1 to 11, wherein

the defect detection unit (73) integrates the plurality of defect candidates positioned at the substantially same positions in the stacking direction, prepares a stacking direction length threshold for the integrated defect candidate and a maximum layer length threshold in the layer, and detects the integrated defect candidate as the defect in a case where a stacking direction length (Lz) of the integrated defect candidate is equal to or larger than the stacking direction length threshold and a maximum layer length (Lxy) of the integrated defect candidate in the layer is equal to or larger than the maximum layer length threshold.

**16.** The information processing apparatus according to any one of claims 1 to 11, wherein

the defect detection unit (73) integrates the plurality of defect candidates positioned at the substantially same positions in the stacking direction, prepares a stacking direction length threshold for the integrated defect candidate and a maximum layer length threshold in the layer, and detects the integrated defect candidate as the defect in a case where a stacking direction length (Lz) of the integrated defect candidate is equal to or larger than the stacking direction length threshold or a maximum layer length (Lxy) of the integrated defect candidate in the layer is equal to or larger than the maximum layer length threshold.

**17.** A defect detection method performed by a defect candidate specifying unit (72), a defect detection unit (73), and a display control unit (74) included in an information processing apparatus, the defect detection method comprising:

detecting, by the defect candidate specifying unit (72), a defective portion of a layer as a defect candidate for each layer based on layer data obtained for each layer of a manufactured object manufactured by powder bed fusion additive manufacturing, and specifying a plurality of the defect candidates positioned at substantially the same positions in a plurality of the layers adjacent to each other in a stacking direction;

detecting, by the defect detection unit (73), a defect remaining in the manufactured object based on a size of the plurality of defect candidates positioned at the substantially same positions and specified in the plurality of layers in the stacking direction and a size of each of the plurality of defect candidates in the layer, and determining the defect as any one of a first defect which is not allowed to remain in the manufactured object and a second defect which is allowed to remain in the manufactured object based on a maximum length of the defect; and

editing, by the display control unit (74), defect information including at least one of the first defect and the second defect into a visualized image and performing control such that the visualized image is displayable on a display unit (90) during the powder bed fusion additive manufacturing.

**18.** A three-dimensional powder bed fusion additive manufacturing apparatus comprising:

a build plate (22) on which a powder bed obtained by spreading a powder material is formed;

a powder supply system (16) configured to spread the powder material over the powder bed;

a beam irradiation unit (2) configured to irradiate the powder material spread over the powder bed with a beam for manufacturing;

an electron optical system configured to perform scanning with the beam for manufacturing according to a melting condition for melting the powder material to melt the powder material spread over the powder bed;

a defect candidate specifying unit (72) configured to detect a defective portion of a layer as a defect candidate for each layer based on layer data obtained for each layer of a manufactured object manufactured by powder bed fusion additive manufacturing, and to specify a plurality of the defect candidates positioned at substantially the same positions in a plurality of the layers adjacent to each other in a stacking direction;

a defect detection unit (73) configured to detect a defect remaining in the manufactured object based on a size of the plurality of defect candidates positioned at the substantially same positions and specified in the plurality of layers in the stacking direction and a size of each of the plurality of defect candidates in the layer, and to determine the defect as any one of a first defect which is not allowed to remain in the manufactured object and a second defect which is allowed to remain in the manufactured object based on a maximum length of the defect; and

a display control unit (74) configured to edit defect information including at least one of the first defect and the second defect into a visualized image and to perform control such that the visualized image is displayable on a display unit (90) during the powder bed fusion additive manufacturing.

FIG. 1

*FIG. 2*

1

60

INPUT UNIT

*FIG. 3*

54

MANUFACTURING
CONTROL SOFTWARE

70

CONTROL UNIT

71

MANUFACTURING
CONTROL UNIT

72

DEFECT CANDIDATE
SPECIFYING UNIT

73

DEFECT
DETECTION UNIT

74

DISPLAY
CONTROL UNIT

80

RECORDING UNIT

81

PARAMETER
RECORDING
UNIT

82

DEFECT
INFORMATION
RECORDING
UNIT

90

DISPLAY UNIT

```
          ┌─────────────────────────────┐
          │            START            │
          │  DEFECT DETECTION PROCESSING │
          └─────────────────────────────┘
                        │
                        ▼                        S1
          ┌─────────────────────────────────────┐
          │   m←m+1  (INITIAL VALUE 0 FOR m)     │
          └─────────────────────────────────────┘
                        │
                        ▼                        S2
          ┌─────────────────────────────────────┐
          │   PBF-AM PROCESSING FOR m-TH LAYER   │
          └─────────────────────────────────────┘
                        │
                        ▼                        S3
                   ╱─────────────╲
      NO          ╱  HAS PBF-AM OF ╲          FIG. 4
   ◄─────────────  PLURALITY OF LAYERS BEEN
                  ╲   COMPLETED?   ╱
                   ╲─────────────╱
                        │ YES
                        ▼                        S4
          ┌─────────────────────────────────────┐
          │      PERFORM DEFECT CANDIDATE        │
          │       SPECIFYING PROCESSING         │
          └─────────────────────────────────────┘
                        │
                        ▼                        S5
          ┌─────────────────────────────────────┐
          │        PERFORM DEFECT               │
          │     DETERMINATION PROCESSING        │
          └─────────────────────────────────────┘
                        │
                        ▼                        S6
                   ╱─────────────╲
                  ╱ IS THERE INPUT ╲       NO
                   OPERATION PERFORMED ────────┐
                  ╲    BY USER?    ╱           │
                   ╲─────────────╱            │
                        │ YES                  │
                        ▼         S7           │
          ┌─────────────────────────────┐     │
          │      PERFORM DISPLAY         │     │
          │      CONTROL PROCESSING      │     │
          └─────────────────────────────┘     │
                        │◄───────────────────┘
                        ▼                        S8
                   ╱─────────────╲
      NO          ╱   HAS PBF-AM   ╲
   ◄─────────────  OF FINAL LAYER BEEN
                  ╲   COMPLETED?   ╱
                   ╲─────────────╱
                        │ YES
                        ▼
                 ┌─────────────┐
                 │     END     │
                 └─────────────┘
```

START
DEFECT CANDIDATE
SPECIFYING PROCESSING

S11

MEASURE AREA OF EACH OF TWO
DEFECT CANDIDATES OF WHICH
XY CROSS SECTIONS AT LEAST
PARTIALLY OVERLAP EACH OTHER

S12

CALCULATE AREA RATIO OF
TWO DEFECT CANDIDATES
AND AREA RATIO OF
OVERLAPPING PORTION

S13

ARE CONDITIONS
RELATED TO AREA RATIOS
RA AND RB AND PARAMETERS
$\alpha$ AND $\beta$ SATISFIED?

NO

YES

*FIG. 5*

S15

YES

ARE CONDITIONS
RELATED TO AREA RATIOS
RA AND RB AND PARAMETER
$\gamma$ SATISFIED?

S14

SPECIFY THAT TWO DEFECT
CANDIDATES ARE AT SUBSTANTIALLY
SAME POSITIONS
(POSITION DEFINITION 1)

NO

S16

RECORD POSITION AND
SIZE OF DEFECT CANDIDATE
AS DEFECT INFORMATION

RETURN

38

**FIG. 6**

DEFECT CANDIDATE

DEFECT CANDIDATE

**FIG. 7**

DEFECT CANDIDATE A

N-TH
LAYER

AREA SA

Y

X

*FIG. 8*

DEFECT CANDIDATE B

N+1-TH
LAYER

AREA SB

Y

X

*FIG. 9*

OVERLAPPING
PORTION AB

DEFECT
CANDIDATE B

DEFECT
CANDIDATE A

AREA SB

*FIG. 10*

AREA SAB

OVERLAPPING
OF
N-TH LAYER
AND
N+1-TH LAYER

AREA SA

Y

X

DEFECT CANDIDATE B
(AREA SB)

DEFECT CANDIDATE A

*FIG. 11*

OVERLAPPING
OF
N-TH LAYER
AND
N+1-TH LAYER

AREA SA

Y

X

FIG. 12

```
        ┌─────────────────────────────────┐
        │            START                │
        │ DEFECT DETERMINATION PROCESSING │
        └─────────────────────────────────┘
                       │
                       ▼
        ┌─────────────────────────────────┐
        │      READ DEFECT CANDIDATES     │──── S21
        │       OF ADJACENT LAYERS        │
        └─────────────────────────────────┘
                       │
                       ▼
        ┌─────────────────────────────────┐
        │ INTEGRATE PLURALITY OF DEFECT   │
        │   CANDIDATES THAT SPAN          │──── S22
        │ PLURALITY OF LAYERS AND ARE     │
        │ POSITIONED AT SUBSTANTIALLY     │
        │     THE SAME POSITIONS          │
        └─────────────────────────────────┘
                       │
                       ▼
        ┌─────────────────────────────────┐
        │     ASSIGN DEFECT CANDIDATE ID  │──── S23
        │ TO EACH INTEGRATED DEFECT       │
        │          CANDIDATE              │
        └─────────────────────────────────┘
                       │
                       ▼
        ┌─────────────────────────────────┐
        │     MEASURE LENGTHS OF EACH     │
        │    INTEGRATED DEFECT CANDIDATE  │──── S24
        │ IN x DIRECTION, y DIRECTION,    │
        │       AND z DIRECTION           │
        └─────────────────────────────────┘
                       │
                       ▼
        ┌─────────────────────────────────┐
        │ SET LARGER ONE OF LENGTH Lx IN  │
        │   x DIRECTION AND LENGTH Ly IN  │──── S25
        │       y DIRECTION AS            │
        │   MAXIMUM LAYER LENGTH Lxy      │
        └─────────────────────────────────┘
                       │
                       ▼
        ┌─────────────────────────────────┐
        │ SET LARGER ONE OF LENGTH Lz IN  │
        │   z DIRECTION AND MAXIMUM       │──── S26
        │   LAYER LENGTH Lxy AS           │
        │       MAXIMUM LENGTH            │
        └─────────────────────────────────┘
                       │
                       ▼
                   ╱ S27 ╲
              ╱ MAXIMUM LENGTH ╲    NO
             ╱ > MAXIMUM LENGTH  ╲──────┐
              ╲ THRESHOLD δ ?    ╱      │
                   ╲    ╱              │
                     │ YES             │
                     ▼                 │
        ┌─────────────────────────┐    │
        │  DETERMINE THAT         │    │
        │  INTEGRATED DEFECT      │ S28 │
        │  CANDIDATE IS DEFECT    │    │
        └─────────────────────────┘    │
                     │                 │
                     ▼                 │
      YES      ╱ S29 ╲                │
     ┌──────╱ MAXIMUM LENGTH ╲        │
     │       ╲ > MAXIMUM       ╱       │
     │        ╲ ALLOWABLE     ╱        │
     │         ╲ LENGTH ω ?  ╱         │
     │              │ NO               │
     ▼              ▼                  │
┌──────────┐  ┌──────────┐            │
│DETERMINE │  │DETERMINE │            │
│THAT      │  │THAT      │            │
│DETERMINED│S30│DETERMINED│ S31        │
│DEFECT IS │  │DEFECT IS │            │
│DEFECT A  │  │DEFECT B  │            │
└──────────┘  └──────────┘            │
     │             │                  │
     └─────────────┼──────────────────┘
                   ▼
           ┌──────────────┐
           │    RETURN    │
           └──────────────┘
```

# FIG. 13

N+7–TH LAYER

N+6–TH LAYER

N+5–TH LAYER

N+4–TH LAYER

N+3–TH LAYER

N+2–TH LAYER

N+1–TH LAYER

N–TH LAYER

z DIRECTION

x DIRECTION

# FIG. 14

ID4

ID2

N+7–TH LAYER

N+6–TH LAYER

N+5–TH LAYER

ID3

N+4–TH LAYER

ID1

N+3–TH LAYER

N+2–TH LAYER

N+1–TH LAYER

N–TH LAYER

z DIRECTION

x DIRECTION

43

# FIG. 15

N+7-TH LAYER

N+6-TH LAYER

N+5-TH LAYER

N+4-TH LAYER

N+3-TH LAYER

N+2-TH LAYER

N+1-TH LAYER

N-TH LAYER

z DIRECTION

x DIRECTION

ID4

ID2

ID3

ID1

Lz4

Lz2

Lz3

Lz1

Lx4

Lx1

Lx3

Lx2

*FIG. 16*

```
┌─────────────────────────────┐
│          START              │
│ DISPLAY CONTROL PROCESSING  │
└─────────────────────────────┘
              │
              ▼                  S41
┌─────────────────────────────┐
│   RECEIVE INPUT OPERATION    │
│      PERFORMED BY USER       │
└─────────────────────────────┘
              │
              ▼                  S42
┌─────────────────────────────┐
│    READ DEFECT CANDIDATE     │
│   AND DEFECT INFORMATION     │
│ ACCORDING TO INPUT OPERATION │
└─────────────────────────────┘
              │
              ▼                  S43
┌─────────────────────────────┐
│        PERFORM IMAGE         │
│      EDITING PROCESSING      │
└─────────────────────────────┘
              │
              ▼                  S44
┌─────────────────────────────┐
│      OUTPUT VISUALIZED       │
│    IMAGE TO DISPLAY UNIT     │
└─────────────────────────────┘
              │
              ▼
┌─────────────────────────────┐
│          RETURN             │
└─────────────────────────────┘
```

*FIG. 17*

```
                START
        IMAGE EDITING PROCESSING

                    │  S51
                    ▼
        ┌─────────────────────────┐
        │  READ INFORMATION REGARDING │
        │  DEFECTS A AND B AND INFORMATION │
        │  REGARDING DEFECT CANDIDATE │
        └─────────────────────────┘
                    │  S52
                    ▼
        ┌─────────────────────────┐
        │  ASSIGN FIRST COLOR (RED) │
        │  TO REGION OF DEFECT A   │
        └─────────────────────────┘
                    │  S53
                    ▼
        ┌─────────────────────────┐
        │  ASSIGN SECOND COLOR (YELLOW) │
        │  TO REGION OF DEFECT B   │
        └─────────────────────────┘
                    │  S54
                    ▼
        ┌─────────────────────────┐
        │  ASSIGN THIRD COLOR (BLUE) │
        │  TO REGION OF DEFECT CANDIDATE │
        │  OTHER THAN DEFECTS A AND B │
        └─────────────────────────┘
```

S55 GENERATE TWO-DIMENSIONAL IMAGE (FIRST EMBODIMENT)

S56 GENERATE THREE-DIMENSIONAL IMAGE (SECOND EMBODIMENT)

S57 GENERATE RESULT TABLE (THIRD EMBODIMENT)

S58 GENERATE HISTOGRAM AND GRAPH (FOURTH EMBODIMENT)

S59 EDIT INTO VISUALIZED IMAGE

RETURN

# FIG. 18

# FIG. 19

DEFECT A: FIRST COLOR (RED)

DEFECT B: SECOND COLOR (YELLOW)

DEFECT CANDIDATE: THIRD COLOR (BLUE)

*FIG. 20*

110

112 Color  111  113 Parts Name  Parts A ▽

116
114  38
115
1.0[mm]
S

▨ DEFECT A: FIRST COLOR (RED)

▨ DEFECT B: SECOND COLOR (YELLOW)

## FIG. 21

120

| | Part Name | VOLUME OF EACH Part [mm^3] | VOLUMETRIC DEFECT RATIO [%] | NUMBER OF DEFECTS | MAXIMUM DEFECT LENGTH [um] | DETERMINATION RESULT |
|---|---|---|---|---|---|---|
| 7 | Parts A | 247.513 | 0.170 | 2 | 849@I206 | BAD |
| 8 | Parts B | 259.478 | 0.000 | 0 | 0 | GOOD |
| 9 | Parts C | 510.000 | 0.000 | 0 | 0 | GOOD |

## FIG. 22

130

# FIG. 23

140

START
DEFECT DETERMINATION PROCESSING

S21

READ DEFECT CANDIDATES
OF ADJACENT LAYERS

S22

INTEGRATE PLURALITY OF DEFECT CANDIDATES
THAT SPAN PLURALITY OF LAYERS AND ARE
POSITIONED AT SUBSTANTIALLY THE SAME POSITIONS

S23

ASSIGN DEFECT CANDIDATE ID
TO EACH INTEGRATED DEFECT CANDIDATE

S24

MEASURE LENGTHS OF EACH
INTEGRATED DEFECT CANDIDATE
IN x DIRECTION, y DIRECTION, AND z DIRECTION

S25

SET LARGER ONE OF LENGTH Lx IN x DIRECTION
AND LENGTH Ly IN y DIRECTION
AS MAXIMUM LAYER LENGTH Lxy

S27B

STACKING
DIRECTION LENGTH
≥ STACKING DIRECTION LENGTH
THRESHOLD?

NO

*FIG. 24*

YES

S27C

MAXIMUM
LAYER LENGTH
≥ MAXIMUM LAYER LENGTH
THRESHOLD?

NO

YES

S28

DETERMINE THAT INTEGRATED
DEFECT CANDIDATE IS DEFECT

RETURN

START
DEFECT DETERMINATION PROCESSING

S21
READ DEFECT CANDIDATES
OF ADJACENT LAYERS

S22
INTEGRATE PLURALITY OF DEFECT CANDIDATES
THAT SPAN PLURALITY OF LAYERS AND ARE
POSITIONED AT SUBSTANTIALLY THE SAME POSITIONS

S23
ASSIGN DEFECT CANDIDATE ID
TO EACH INTEGRATED DEFECT CANDIDATE

S24
MEASURE LENGTHS OF EACH
INTEGRATED DEFECT CANDIDATE
IN x DIRECTION, y DIRECTION, AND z DIRECTION

S25
SET LARGER ONE OF LENGTH Lx IN x DIRECTION
AND LENGTH Ly IN y DIRECTION
AS MAXIMUM LAYER LENGTH Lxy

S27B
STACKING
DIRECTION LENGTH
≥ STACKING DIRECTION LENGTH
THRESHOLD?
NO

YES

*FIG. 25*

S27C
MAXIMUM
LAYER LENGTH
≥ MAXIMUM LAYER LENGTH
THRESHOLD?
NO

YES

S28
DETERMINE THAT INTEGRATED
DEFECT CANDIDATE IS DEFECT

RETURN

FIG. 26

EP 4 741 083 A1

| | Part Name | VOLUME OF EACH Part [mm^3] | VOLUMETRIC DEFECT RATIO[%] | NUMBER OF DEFECTS | MAXIMUM DEFECT LENGTH[um] | DETERMINATION RESULT |
|---|---|---|---|---|---|---|
| 7 | Parts A | 247.513 | 0.170 | 2 | 849@I206 | BAD |
| 8 | Parts B | 259.478 | 0.000 | 0 | 0 | GOOD |
| 9 | Parts C | 510.000 | 0.000 | 0 | 0 | GOOD |

EUROPEAN SEARCH REPORT

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/324175 A1 (MORIMATSU DAISUKE [JP] ET AL) 13 October 2022 (2022-10-13) | 1 | INV. B22F10/28 B22F10/38 |
| Y | * paragraph [0002]; claims 1-19,24; figures 2-5,8,12 * <br> * paragraphs [0061], [0086], [0131], [0135], [0136]; figure 5 * <br> * paragraphs [0076], [0087] - [0088], [0092] - [0093]; figure 4 * <br> * paragraphs [0116] - [0122]; figure 7 * <br> * paragraph [0172]; figure 12 * <br> ----- | 1-18 | B22F10/85 B22F12/90 B33Y10/00 B33Y30/00 B33Y50/02 G06T7/00 |
| Y | S. CLIJSTERS ET AL: "In situ quality control of the selective laser melting process using a high-speed, real-time melt pool monitoring system", <br> THE INTERNATIONAL JOURNAL OF ADVANCED MANUFACTURING TECHNOLOGY, <br> vol. 75, no. 5-8, <br> 10 August 2014 (2014-08-10), pages 1089-1101, XP055266002, <br> London <br> ISSN: 0268-3768, DOI: <br> 10.1007/s00170-014-6214-8 <br> * abstract; figures 1-2 * <br> * setion 2:experimental set-up; page 1098, column 1, paragraph 5 - page 1098, column 2, paragraph 2 * <br> * section 3.4: detection of pore positions in three dimensions section 3.5: Validation; figures 10-13 * <br> ----- <br> -/-- | 1-18 | ADD. B33Y50/00 B29C64/153 B29C64/393 |

| | |
|---|---|
| | TECHNICAL FIELDS SEARCHED (IPC) |
| | B22F B33Y B23K G05B G06T B29C G01N |

The present search report has been drawn up for all claims

| Place of search | Date of completion of the search | Examiner |
|---|---|---|
| The Hague | 31 March 2026 | Aliouane, Nadir |

page 1 of 3

Europäisches
Patentamt

European
Patent Office

Office européen
des brevets

# EUROPEAN SEARCH REPORT

Application Number

EP 25 21 2448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2023 181933 A (HITACHI LTD) 25 December 2023 (2023-12-25) * paragraphs [0017], [0026] - [0027], [0032], [0050], [0051], [0061]; claims 1-15; figures 1-3 * * paragraphs [0022], [0047] - [0048], [0055], [0076], [0082]; figures 3,11 * | 1-18 | |
| Y | RENNER JAKOB ET AL: "In situ build surface topography determination in electron beam powder bed fusion", PROGRESS IN ADDITIVE MANUFACTURING, vol. 9, no. 5, 7 May 2024 (2024-05-07), pages 1537-1553, XP093380664, DE ISSN: 2363-9512, DOI: 10.1007/s40964-024-00621-0 * abstract * * figures 1-2 * * section 2.3 * * section 4.3 build surface topograpies; figures 6-8 * | 1-18 | |
| A | EP 3 950 180 A1 (SIEMENS ENERGY GLOBAL GMBH & CO KG [DE]) 9 February 2022 (2022-02-09) * paragraphs [0030], [0063], [0068] - [0070]; claims 1-5,9,13; figures 1-2,4,6 * | 13-15 | TECHNICAL FIELDS SEARCHED (IPC) |
| A | US 2013/301927 A1 (CLIFTON DAVID [GB] ET AL) 14 November 2013 (2013-11-14) * paragraphs [0058] - [0066], [0078]; claims 1-4; figures 1-4 * | 12 | |
| A | US 11 865 613 B2 (ADDITIVE MONITORING SYSTEMS LLC [US]) 9 January 2024 (2024-01-09) * figures 21-23 * | 1-18 | |

-/--

The present search report has been drawn up for all claims

| Place of search | Date of completion of the search | Examiner |
|---|---|---|
| The Hague | 31 March 2026 | Aliouane, Nadir |

EPO FORM 1503 03.82 (P04C01)

Europäisches
Patentamt

European
Patent Office

Office européen
des brevets

## EUROPEAN SEARCH REPORT

**Application Number**

EP 25 21 2448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MIRELES JORGE ET AL: "Closed-loop automatic feedback control in electron beam melting", THE INTERNATIONAL JOURNAL OF ADVANCED MANUFACTURING TECHNOLOGY SPRINGER, LONDON, vol. 78, no. 5, 7 January 2015 (2015-01-07), pages 1193-1199, XP035491751, ISSN: 0268-3768, DOI: 10.1007/S00170-014-6708-4 [retrieved on 2015-01-07] * abstract; figures 1-2,6 * * section 3 :methods; page 1195 - page 1197 * | 1-18 | |
| A | US 2014/308153 A1 (LJUNGBLAD ULRIC [SE]) 16 October 2014 (2014-10-16) * claims 14-17; figures 1-3 * | 1-18 | |

TECHNICAL FIELDS
SEARCHED (IPC)

The present search report has been drawn up for all claims

| Place of search | Date of completion of the search | Examiner |
|---|---|---|
| The Hague | 31 March 2026 | Aliouane, Nadir |

EPO FORM 1503 03.82 (P04C01)

## ANNEX TO THE EUROPEAN SEARCH REPORT
## ON EUROPEAN PATENT APPLICATION NO.

EP 25 21 2448

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2026

| Patent document cited in search report | | | Publication date | Patent family member(s) | | | Publication date |
|---|---|---|---|---|---|---|---|
| US 2022324175 | A1 | | 13-10-2022 | CN | 114450584 | A | 06-05-2022 |
| | | | | DE | 112020004392 | T5 | 02-06-2022 |
| | | | | JP | 7572362 | B2 | 23-10-2024 |
| | | | | JP | WO2021054127 | A1 | 25-03-2021 |
| | | | | US | 2022324175 | A1 | 13-10-2022 |
| | | | | WO | 2021054127 | A1 | 25-03-2021 |
| JP 2023181933 | A | | 25-12-2023 | DE | 112023000895 | T5 | 05-12-2024 |
| | | | | JP | 2023181933 | A | 25-12-2023 |
| | | | | WO | 2023243403 | A1 | 21-12-2023 |
| EP 3950180 | A1 | | 09-02-2022 | CN | 116075381 | A | 05-05-2023 |
| | | | | EP | 3950180 | A1 | 09-02-2022 |
| | | | | EP | 4142969 | A1 | 08-03-2023 |
| | | | | US | 2024239049 | A1 | 18-07-2024 |
| | | | | WO | 2022028753 | A1 | 10-02-2022 |
| US 2013301927 | A1 | | 14-11-2013 | CN | 103339929 | A | 02-10-2013 |
| | | | | EP | 2647194 | A1 | 09-10-2013 |
| | | | | JP | 6139002 | B2 | 31-05-2017 |
| | | | | JP | 2013546084 | A | 26-12-2013 |
| | | | | JP | 2016185337 | A | 27-10-2016 |
| | | | | US | 2013301927 | A1 | 14-11-2013 |
| | | | | WO | 2012072995 | A1 | 07-06-2012 |
| US 11865613 | B2 | | 09-01-2024 | EP | 4217136 | A1 | 02-08-2023 |
| | | | | JP | 2024539526 | A | 29-10-2024 |
| | | | | US | 2023249253 | A1 | 10-08-2023 |
| | | | | WO | 2023059618 | A1 | 13-04-2023 |
| US 2014308153 | A1 | | 16-10-2014 | CN | 104023948 | A | 03-09-2014 |
| | | | | EP | 2797730 | A1 | 05-11-2014 |
| | | | | US | 2014308153 | A1 | 16-10-2014 |
| | | | | US | 2019039139 | A1 | 07-02-2019 |
| | | | | US | 2019039140 | A1 | 07-02-2019 |
| | | | | WO | 2013098054 | A1 | 04-07-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020200501 A